# EUROPEAN PATENT SPECIFICATION

(11) **EP 3 594 293 B1**
(45) Date of publication and mention of the grant of the patent: **21.02.2024**
(21) Application number: 18764039.6
(22) Date of filing: 28.02.2018
(51) Int. Cl.: C09D 11/101, C09D 11/106, C09D 11/107

(54) **ACTINIC-RAY-CURABLE INK FOR LITHOGRAPHIC PRINTING AND METHOD FOR PRODUCING PRINTED MATTER USING SAME**
DURCH AKTINISCHE STRAHLEN HÄRTBARE TINTE FÜR LITHOGRAFISCHEN DRUCK UND VERFAHREN ZUR HERSTELLUNG VON DRUCKERZEUGNISSEN DAMIT
ENCRE DURCISSABLE PAR RAYONNEMENT ACTINIQUE POUR IMPRESSION LITHOGRAPHIQUE ET PROCÉDÉ DE PRODUCTION DE MATIÈRE IMPRIMÉE L'UTILISANT

(30) Priority: 07.03.2017 JP 2017042418; 07.03.2017 JP 2017042419; 07.03.2017 JP 2017042420; 14.03.2017 JP 2017048101
(43) Date of publication of application: 15.01.2020
(73) Proprietor: Toray Industries, Inc., Tokyo 103-8666 (JP)
(72) Inventor: TSUJI, Yuichi, Otsu-shi Shiga 520-8558 (JP); SADAKUNI, Hironobu, Otsu-shi Shiga 520-8558 (JP); KOSHIMIZU, Noboru, Otsu-shi Shiga 520-8558 (JP); FUJIMARU, Koichi, Otsu-shi Shiga 520-8558 (JP); INOUE, Takejiro, Otsu-shi Shiga 520-8558 (JP)
(74) Representative: Kador & Partner Part mbB
(86) International application number: PCT/JP2018/007607
(87) International publication number: WO 2018/163942

(56) References cited:
- EP-A1- 3 381 988
- JP-A- H1 160 659
- JP-A- H05 156 196
- JP-A- H10 195 361
- JP-A- H10 287 787
- JP-A- H10 287 787
- JP-A- S62 241 979
- JP-A- 2000 072 832
- JP-A- 2011 221 476
- JP-A- 2012 521 386
- JP-A- 2013 241 580
- JP-A- 2013 241 580
- JP-A- 2018 002 836
- US-A- 5 587 405

## Description

### Technical Field

The present invention relates to active energy ray-curable ink for offset printing which has marked curability and toning resistance during printing, exhibits good transferability and adhesiveness to plastic films having low wettability, and imparts high hiding power to printed matter, and also to a method for producing printed matter using the same .

### Background Art

Offset printing is a widely used printing system for supplying printed matters at high speed, in large quantity, and at low cost. Particularly, in recent years, active energy ray-curable offset printing using a light source such as a mercury lamp or a metal halide lamp is widely used in many fields owing to its high productivity.

In prior art, objects of offset printing are generally paper, but printing on plastic film is spreading owing to diversification of printable articles. Particularly, in recent years, the attempt to use offset printing on soft packaging of, for example, housewares, food items, and drugs is started using thin film as a substrate.

Printing on a thin film is carried out on a roll-to- roll system, so that active energy ray-curable ink for offset printing capable of instant curing is absolutely necessary from the viewpoint of prevention of offset. However, prior art light sources such as a mercury lamp and a metal halide lamp have high power, while heat generated from these light sources thermally stretches thin film, and markedly decreases accuracy of registration.

As an active energy ray light source giving off little heat and having a low power consumption, light emitting diode light sources emitting unimodal bright lines with narrow emission wavelength widths are receiving attention. However, the available wavelength of active energy rays and the amount of energy are limited, so that the increase of ink sensitivity is necessary. Therefore, active energy ray-curable ink for offset printing (Patent Literature 1) combined with a specific photopolymerization initiators is disclosed.

Thin films used for soft packaging are soft and easily bent, so that their printed surface is readily rubbed during front side printing, so that the ink film must firmly adhere to the thin films. Furthermore, even when back side printing is followed by lamination, adhesiveness for preventing the ink film from the thin film of the substrate during post processing and use is required. Therefore, Patent Literature 2 discloses an embodiment of active energy ray-curable ink for offset printing, wherein highly curable monomers having a plurality of reactive groups are used for improving curability.

The white ink printed as a base color on a transparent film is required to express high hiding power (Patent Literature 3), and achievement of this absolutely requires prevention of hollow holes and high leveling properties.

### Citation List

### Patent Literature

Patent Literature 1: JP 4289441 B2
Patent Literature 2: JP 2012-162646 A, Background Art
Patent Literature 3: JP 2003-192970 A
Patent Literature 4: EP 3 381 988 A1
Patent Literature 5: JP H10 287787 A
Patent Literature 6 : US 5 587 405 A

### Summary of Invention

### Technical Problem

The active energy ray-curable ink for offset printing disclosed in Patent Literature 1 achieves curability of certain level when a light emitting diode having an emission wavelength at 365 nm as a light source, but has small absorbance for the available wavelength region, or is combined with a photopolymerization initiator which has a low initiator efficiency, so that the content of the photopolymerization initiator tended to increase.

In the active energy ray-curable ink for offset printing disclosed in Patent Literature 2, volume shrinkage during curing is large, so that adhesiveness with the plastic film as substrate tended to deficient.

Additionally, active energy ray-curable ink for offset printing is 100 times or more viscous in comparison with gravure ink commonly used for printing of soft packaging, and thus has problems that poor transferability to substrates and poor leveling properties, and that it tends to cause hollow holes on the printed matter and asperities in the ink film surface because the ink is instantaneously cured by irradiation with an active energy ray, so that the ink has no time of leveling.

Furthermore, if the ink viscosity is decreased for improving transferability and leveling properties, it can cause problems that the cohesive force of the ink becomes deficient under high shearing stress during printing, the ink attaches even to the non-printing part to which the ink originally will not adhere, and, printing failure referred to as toning can occur. Additionally, there is another problem that plastic films, especially polyolefins such as polyethylene and polypropylene have low surface energy, and thus are difficult to wet. Patent Literature 4 is directed to a lithographic ink having superior surface staining resistance and fluidity. Patent Literature 5 discloses a resin having side chains each of which results from the reaction of at least one radical-polymerizable unsaturated carboxylic acid such as an acrylic acid, at least one carboxylic radical initiator compound (e.g. o- benzoylbenzoic acid) or a carboxylic photosensitizer (e.g. p-dimethylaminobenzoic acid) and optionally a carboxylic alkyd resin through the carboxyl group and the epoxy group in the molecule of the polymer.
Patent Literature 6 discloses a radiation-curable ink composition containing a vehicle mixture comprising: (A) at least one linear polyester oligomer and/or polymer substantially free of an acid group and free of a polymerizable double bond in a molecule, wherein 1 to 10 double bonds are pendent from the linear polyester chain, and/or mixture thereof, (B) at least one single double bond-containing carboxylic acid wherein the acid has at least one acid group, and/or carboxylic ester of the said acid, and/or carboxylic amide of the said acid, and/or mixture thereof, (C) a double bond-containing polycarboxylic ester, wherein 2 to 10 acid groups are present and at least 2 double bonds are pendent from the ester having 2 to 10 acid groups, (D) at least one double bond-containing fluorinated carboxylic ester, and/or block copolymer comprising a fluorinated alkyl group-containing polymer segment and a (meth) acrylicpolymer segment, and/or block copolymer comprising a siloxane group-containing polymer segment and a (meth)acrylic polymer segment, and/or mixture thereof, (E) a double bond-containing carboxylic ester, having at least 2 double bonds and free of an acid group, provided that it is excluded from the above-mentioned ingredient (A), and (F) at least one single double bond-containing carboxylic ester and/or amide and/or imide free of an acid group, and/or mixture thereof, wherein the acid value of the vehicle mixture is from 5 to 100, is provided.

Therefore, the present invention provides active energy ray-curable ink for offset printing which solves the above-described problems with prior art, has marked curability and toning resistance during printing, exhibits good transferability and adhesiveness to plastic films having low wettability, and imparts high hiding power to printed matter, and also provides a method for producing printed matter using the ink.

### Solution to Problem

The active energy ray-curable ink for offset printing of the present invention includes a pigment, a polyfunctional (meth)acrylate having a hydroxyl group, and a resin having an ethylenic unsaturated group and a hydrophilic group according to claim 1.

### Advantageous Effects of Invention

The present invention provides active energy ray-curable ink for offset printing which has marked curability and toning resistance during printing, and exhibits good transferability to plastic films having low wettability, and the use of the ink allows to obtain printed matters having high adhesiveness and hiding power.

### Description of Embodiments

The present invention is specifically described below. The active energy ray-curable ink for offset printing of the present invention includes a pigment. The pigment included in the present invention may be one or more selected from the organic pigments and inorganic pigments commonly usedin ink compositions for offset printing.

The active energy ray-curable ink for offset printing of the present invention includes a polyfunctional (meth)acrylate having a hydroxyl group. The hydroxyl group interacts with surface functional groups of pigments in ink, and thus has good dispersibility for pigments, and improves ink flowability. Owing to the improvement of ink flowability, good transferability is exhibited during printing.

The active energy ray-curable ink for offset printing of the present invention includes a resin having an ethylenic unsaturated group and a hydrophilic group. The hydrophilic group, interacts with surface functional groups of a pigment in ink, and thus has good dispersibility for a pigment, and thus improves ink flowability. Additionally, interaction occurs between hydrophilic groups of the resin, and between a hydrophilic group and a hydroxyl group of the hydroxylic and polyfunctional (meth) acrylate of the resin, this increases the cohesive force of the ink under high shearing stress during printing. The increase of the cohesive force of the ink improves ink repulsion to the non-printing part, whereby toning resistance is improved.

The active energy ray-curable ink for offset printing of the present invention preferably includes a (meth)acrylate having an alicyclic skeleton or an aliphatic skeleton with a carbon number of 6 to 18. The addition of the (meth)acrylate having an alicyclic skeleton or an aliphatic skeleton with a carbon number of 6 to 18 decreases the viscosity and surface free energy of ink, whereby ink transferability to the substrate and leveling properties are improved.

The (meth)acrylate having an alicyclic skeleton or an aliphatic skeleton with a carbon number of 6 to 18 preferably has an alicyclic skeleton, thereby reducing volume shrinkage by active energy ray irradiation during curing, and improving adhesiveness to a substrate.

The alicyclic skeleton is more preferably a fused ring skeleton, because it is more rigid, has a small volume shrinkage during curing, and has good film properties such as scratch resistance of the cured film.

Examples of the alicyclic skeleton include a norbornane skeleton, an adamantane skeleton, a tricyclodecane skeleton, and a dicyclopentadiene skeleton, and a tricyclodecane skeleton is particularly preferred.

The (meth)acrylate having an alicyclic skeleton or an aliphatic skeleton with a carbon number of 6 to 18 preferably has two or more (meth) acrylate-derived structures for achieving good curing sensitivity to an active energy ray, and increasing the strength of the cured film to improve adhesiveness.

Specific examples of the (meth)acrylate having an alicyclic skeleton or an aliphatic skeleton with a carbon number of 6 to 18 include monofunctional (meth)acrylates having an aliphatic skeleton with a carbon number of 6 to 18, such as hexyl (meth)acrylate, octyl (meth)acrylate, nonyl (meth)acrylate, dodecyl (meth)acrylate, stearyl (meth)acrylate, and isostearyl (meth)acrylate, monofunctional (meth)acrylates having an alicyclic skeleton, such as isobornyl (meth)acrylate, norbornyl (meth)acrylate, norbornane-2-methanol (meth)acrylate, cyclohexyl (meth)acrylate, tricyclopentenyl (meth)acrylate, tricyclopentenyloxy (meth)acrylate, and tricyclodecane monomethylol (meth)acrylate. Examples of the bifunctional (meth) acrylate having an aliphatic skeleton with a carbon number of 6 to 18 include 1,6-hexanediol di(meth)acrylate, 1,9-nonanediol di(meth)acrylate, and examples of the bifunctional (meth)acrylate having an alicyclic skeleton include dicyclopentadiene tricyclodecanedimethanol di(meth)acrylate. Another example is a polyester di(meth)acrylate having an aliphatic skeleton with a carbon number of 6 to 18 as a repeating unit. Among them, tricyclodecane dimethanol di(meth) acrylate which has a small volume shrinkage during curing, has a fused ring skeleton, and is bifunctional is particularly preferred. The functional number herein refers the number of a (meth)acrylate-derived structure.

The content of the (meth)acrylate having an alicyclic skeleton or an aliphatic skeleton with a carbon number of 6 to 18 in the active energy ray-curable ink for offset printing of the present invention is preferably 5% by mass or more, more preferably 10% by mass or more, even more preferably 15% by mass or more, and yet even more preferably 20% by mass or more, thereby reducing the viscosity and surface free energy of ink and improving its transferability to the substrate. Additionally, the content is preferably 50% by mass or less, more preferably 40% by mass or less, and even more preferably 35% by mass or less, thereby maintaining good toning resistance of the ink.

The hydroxyl value of the hydroxyl value of the polyfunctional (meth)acrylate having a hydroxyl group is preferably 50 mgKOH/g or more, more preferably 75 mgKOH/g or more, and even more preferably 100 mgKOH/g or more for improving pigment dispersibility. Additionally, the hydroxyl value is preferably 200 mgKOH/g or less, more preferably 180 mgKOH/g or less, and even more preferably 160 mgKOH/g or less, thereby suppressing the increase of viscosity by polar groups, and keeping good flowability.

Specific examples of the polyfunctional (meth)acrylate having a hydroxyl group include poly(meth)acrylates of polyhydric alcohols such as trimethylolpropane, glycerol, pentaerythritol, diglycerol, ditrimethylolpropane, isocyanuric acid, and dipentaerythritol, and alkylene oxide adducts of them. More specific examples include trimethylolpropane di(meth)acrylate, glycerol di(meth)acrylate, pentaerythritol di- or tri(meth)acrylate, diglycerol di- or tri(meth)acrylate, ditrimethylolpropane di- or tri(meth)acrylate, dipentaerythritol di-, tri-, tetra-, or penta(meth)acrylate, their ethylene oxide adducts, propylene oxide adducts, and tetraethylene oxide adducts. Among them, pentaerythritol tri(meth)acrylate, diglycerol tri (meth) acrylate, and ditrimethylolpropane tri (meth) acrylate are particularly preferred, thereby obtaining the active energy ray-curable ink for offset printing of the present invention having good pigment dispersibility and flowability.

The content of the polyfunctional (meth) acrylate having a hydroxyl group in the active energy ray-curable ink for offset printing of the present invention is preferably 20% by mass or more, more preferably 30% bymass or more, and even more preferably 40% by mass or more for improving pigment dispersibility of ink. Additionally, the content is preferably 70% by mass or less, more preferably 60% by mass or less, and even more preferably 50% by mass or less, thereby suppressing the increase of viscosity by polar groups, and keeping good flowability.

The hydrophilic group of the resin having an ethylenic unsaturated group and a hydrophilic group includes a hydroxyl group and a carboxyl group. A carboxyl group and a hydroxyl group achieve good pigment dispersibility and inclusion of a carboxyl group and a hydroxyl group is particularly preferred.

The acid value of the resin having an ethylenic unsaturated group and a hydrophilic group is preferably 30 mgKOH/g or more, more preferably 60 mgKOH/g or more, and even more preferably 75 mgKOH/g or more for achieving good pigment dispersibility of ink, and improving its toning resistance. Additionally, the acid value is preferably 250 mgKOH/g or less, more preferably 200 mgKOH/g or less, and even more preferably 150 mgKOH/g or less, thereby exhibiting solubility to a polyfunctional (meth)acrylate, and keeping ink flowability by suppression of the increase of viscosity by polar groups. The acid value of the resin can be determined in accordance with the neutralization titration method in the section 3.1 of the test method in JIS K 0070:1992.

In the resin having an ethylenic unsaturated group and a hydrophilic group, the ethylenic unsaturated group forms a crosslinked structure by reaction with a radical species, and thus improves sensitivity of the active energy ray-curable ink for offset printing of the present invention to an active energy ray.

The iodine value of the resin having an ethylenic unsaturated group and a hydrophilic group is preferably 0.5 mol/kg or more, more preferably 1.0 mol/kg or more, and even more preferably 1.5 mol/kg or more for achieving good curing sensitivity to an active energy ray. Additionally, the iodine value is preferably 3.0 mol/kg or less, more preferably 2.5 mol/kg or less, and even more preferably 2.0 mol/kg or less for improving storage stability of ink. The iodine value of the resin having an ethylenic unsaturated group and a hydrophilic group can be adjusted by the amount of the ethylenic unsaturated groups . The iodine value of the resin having an ethylenic unsaturated group and a hydrophilic group can be determined by the method described in the section 6.0 of the test method in JIS K 0070:1992.

Examples of the backbone structure of the resin having an ethylenic unsaturated group and a hydrophilic group include, but not limited to, an acrylic resin, a styrene-acrylic resin, a styrene-maleic acid resin, a rosin-modified maleic acid resin, a rosin-modified acrylic resin, an epoxy resin, a polyester resin, a polyurethane resin, and a phenolic resin. Of the resin-derived backbone structures listed above, the backbone structures derived from an acrylic resin, a styrene-acrylic resin, and a styrene-maleic acid resin are preferred from the viewpoints of, for example, easy availability of the monomer, low cost, easiness of synthesis, compatibility with other components of ink, and dispersibility of pigments.

Specific examples of the resin having an ethylenic unsaturated group and a hydrophilic group include a (meth)acrylate copolymer, a (meth)acrylate-(meth)acrylate copolymer, a styrene-(meth)acrylate copolymer, a styrene-(meth)acrylate-(meth)acrylate copolymer, a styrene-maleic acid copolymer, a styrene-maleic acid-(meth)acrylate copolymer, and a styrene-maleic acid-(meth)acrylate copolymer.

Of the resins listed above, the resins having an ethylenic unsaturated group and a hydrophilic group having a resin-derived backbone structure elected from an acrylic resin, a styrene-acrylic resin, and a styrene-maleic acid resin can be prepared by the following method. More specifically, a resin having a hydrophilic group can be obtained by subjecting a compound selected from carboxylic monomers such as (meth)acrylates, itaconic acid, crotonic acid, maleic acid, fumaric acid, vinyl acetate, and their acid anhydrides; hydroxyl group-containing monomers such as 2-hydroxyethyl (meth)acrylate; amino group-containing monomers such as dimethylaminoethyl (meth)acrylate; mercapto group-containing monomers such as 2-(mercaptoacetoxy)ethyl (meth)acrylate, sulfo group-containing monomers such as t-butylsulfonic acid (meth) acrylamide; phosphate group-containing monomers such as 2-(meth)acryloyloxyethyl acid phosphate; (meth)acrylates; styrene; (meth)acrylonitrile; and vinyl acetate to polymerization or copolymerization using a radical polymerization initiator. Additionally, a resin having an ethylenic unsaturated group and a hydrophilic group can be obtained by subjecting the active hydrogen-containing group in the resin having a hydrophilic group, such as a mercapto group, an amino group, a hydroxyl group, or a carboxyl group to addition reaction with an ethylenic unsaturated compound having a glycidyl group or an isocyanate group, and chloride acrylate, chloride methacrylate, or allyl chloride. However, the method is not limited to these examples.

Specific examples of the ethylenic unsaturated compound having a glycidyl group include glycidyl (meth) acrylate, allyl glycidyl ether, glycidyl crotonate, and glycidyl isocrotonate.

Specific examples of the ethylenic unsaturated compound having an isocyanate group include (meth)acryloyl isocyanate and (meth)acryloyl ethyl isocyanate.

The weight average molecular weight of the resin having an ethylenic unsaturated group and a hydrophilic group is preferably 5,000 or more, more preferably 15,000 or more, and even more preferably 20,000 or more for improving toning resistance of the active energy ray-curable ink for offset printing. Additionally, the weight average molecular weight is preferably 100,000 or less, more preferably 75,000 or less, and even more preferably 50,000 or less, thereby keeping ink flowability. The weight average molecular weight of the resin can be obtained by measurement by gel permeation chromatography (GPC) in terms of polystyrene.

The active energy ray-curable ink for offset printing of the present invention preferably include the resin having an ethylenic unsaturated group and a hydrophilic group in an amount of 5% by mass or more and 50% by mass or less. When the content of the resin is within the above-described range, pigment dispersibility and toning resistance of ink are kept good.

The active energy ray-curable ink for offset printing of the present invention preferably include a (meth)acrylate having a hydroxyl group and a rosin skeleton. The (meth) acrylate having a hydroxyl group and a rosin skeleton has marked compatibility with the resin having an ethylenic unsaturated group and a hydrophilic group, and improves adhesiveness of ink to a substrate having low wettability. A rosin skeleton has a lower softening point in comparison with petroleum hydrocarbons having similar molecular weights, and thus have marked adhesiveness particularly to olefin-based substrates having low polarity.

The weight average molecular weight of the (meth) acrylate having a hydroxyl group and a rosin skeleton is preferably 400 or more, and more preferably 600 or more for reducing contraction stress during curing and improving adhesiveness. Additionally, the molecular weight is preferably 3,000 or less, and more preferably 2, 000 for achieving good active energy ray curability.

The hydroxyl value of the (meth) acrylate having a hydroxyl group and a rosin skeleton is preferably 50 mgKOH/g or more, and more preferably 75 mgKOH/g or more for achieving good compatibility with a resin having an ethylenic unsaturated group and a hydrophilic group, and good adhesiveness to a substrate. Additionally, the hydroxyl value is preferably 150 mgKOH/g or less, and more preferably 100 mgKOH/g or less for achieving good water resistance of an ink cured film.

The (meth)acrylate having a hydroxyl group and a rosin skeleton preferably has two or more (meth)acrylate-derived structures for achieving good curing sensitivity to an active energy ray, and increasing the strength of the cured film to improve its adhesiveness.

The (meth)acrylate having a hydroxyl group and a rosin skeleton can be obtained by reaction between glycidyl (meth) acrylate and rosin such as gum rosin, wood rosin, or tall oil rosin, which are natural resins, and disproportionated, dimerized, polymerized, and hydrogenated products of the above-listed rosins. Since the rosins include the carboxylic compounds such as abietic acid, neoabietic acid, and levopimaric acid, the epoxy group is ring-opened by the reaction with glycidyl (meth)acrylate, and the (meth)acrylate thus obtained has a hydroxyl group. The number of the glycidyl (meth)acrylate to be reacted with rosin, more specifically, the acrylate-derived structure of the (meth)acrylate having a hydroxyl group and a rosin skeleton is one or more, and preferably two or more. Alternatively, a (meth)acrylate having a hydroxyl group and a rosin skeleton with one acrylate-derived structure and a (meth) acrylate having a hydroxyl group and a rosin skeleton with two or more acrylate-derived structures may be combined.

The content of the (meth) acrylate having a hydroxyl group and a rosin skeleton in the active energy ray-curable ink for offset printing of the present invention is preferably 5% by mass or more, and more preferably 15% by mass or more, thereby improving adhesiveness to a substrate. Additionally, the content is preferably 50% by mass or less, and more preferably 40% by mass or less, thereby suppressing the increase in viscosity and keeping good flowability.

The active energy ray-curable ink for offset printing of the present invention preferably includes an acylphosphine oxide compound. The acylphosphine oxide compound absorbs light in a long wavelength region of 350 nm or more, and thus has high sensitivity even in a system including a pigment which absorbs or reflects UV light. Additionally, the acylphosphine oxide compound has a photobleaching effect which eliminates light absorption after reaction, and thus exhibits marked internal curability due to this effect. Additionally, the acylphosphine oxide compound commonly has low solubility to polyfunctional (meth)acrylate, and will not uniformly diffuses in ink, this may hinder improvement of sensitivity consistent with the loading, and the deposition of the acylphosphine oxide compound may decrease ink flowability. On the other hand, since the acylphosphine oxide compound exhibits high compatibility to the polyfunctional (meth)acrylate having a hydroxyl group, it is uniformly diffused in a medium, whereby sensitivity to an active energy ray is improved.

Specific examples of the acylphosphine oxide compound include 2,4,6-trimethylbenzoyl-diphenyl-phosphine oxide, 2,6-dimethylbenzoyl-diphenyl-phosphine oxide, 2,6-dimethoxybenzoyl-diphenyl-phosphine oxide, benzoyl-diphenylphosphine oxide, 2,4,6-trimethylbenzoyl-bis(4-methoxyphenyl) phosphine oxide, 2,6-dimethylbenzoyl-bis(4-methoxyphenyl) phosphine oxide, 2,6-dimethoxybenzoyl-bis(4-methoxyphenyl) phosphine oxide, 2,4,6-trimethylbenzoyl-4-methoxyphenyl-phenyl-phosphine oxide, 2,6-dimethylbenzoyl-4-methoxyphenyl-phenyl-phosphine oxide, 2,6-dimethoxybenzoyl-4-methoxyphenyl-phenyl-phosphine oxide, 2,4,6-trimethylbenzoyl-dicyclohexyl-phosphine oxide, 2,6-dimethylbenzoyl-dicyclohexyl-phosphine oxide, 2,6-dimethoxybenzoyl-dicyclohexyl-phosphine oxide, benzoyl-bis(2,4,6-trimethylphenyl) phosphine oxide, bis(2,4,6-trimethylbenzoyl)-phenyl-phosphine oxide, bis(2,6-dimethylbenzoyl)-phenyl-phosphine oxide, bis(2,6-dimethoxybenzoyl)-phenyl-phosphine oxide, bis(2,4,6-trimethylbenzoyl)-2,4,4-trimethylpentyl-phosphine oxide, bis(2,6-dimethoxy benzoyl)-2,4,4-trimethylpentyl-phosphine oxide, and bis(2,6-dimethylbenzoyl)-2,4,4-trimethylpentyl-phosphine oxide. Among them, 2,4,6-trimethylbenzoyl-diphenyl-phosphine oxide, bis(2,4,6-trimethylbenzoyl)-phenyl-phosphine oxide, and bis(2,6-dimethoxybenzoyl)-2,4,4-trimethylpentyl-phosphine oxide are easily available and particularly preferred.

The content of the acylphosphine oxide compound in the active energy ray-curable ink for offset printing of the present invention is preferably 1% by mass or more, more preferably 3% by mass or more, even more preferably 5% by mass or more, thereby improving curing sensitivity to luminescence of 350 nm or more. Additionally, the content is preferably 20% by mass or less, more preferably 15% by mass or less, and even more preferably 10% by mass or less, thereby improving storage stability of ink and keeping good flowability.

The active energy ray-curable ink for offset printing of the present invention preferably has a molecular weight of 200 or less, and includes a hydroxy compound containing no (meth)acrylate group in the amount of in the amount of 0.15% by mass or more 1.0% by mass or less of the total amount of ink. The hydroxy compound refers to a compound having a hydroxy group. The hydroxy compound interacts with the resin having an ethylenic unsaturated group and a hydrophilic group through an intermolecular force such as a van der Waals force or hydrogen bonding, thereby reducing interaction between resins, and improves ink flowability. In particular, since the content of the hydroxy compound is 0.15% by mass or more, interaction between the hydroxy compound and the resin further increases, and the width of the decrease of ink viscosity increases. Additionally, since the content of the hydroxy compound is 1.0% by mass or less of the total ink amount, both of good flowability and toning resistance are achieved.

In the active energy ray-curable ink for offset printing of the present invention, the molecular weight of the hydroxy compound is 200 or less, preferably 150 or less, and more preferably 100 or less for approaching to the hydrophilic group of the resin having an ethylenic unsaturated group and a hydrophilic group and facilitating the action of an intermolecular force such as a van der Waals force or hydrogen bonding.

The content of the hydroxy compound in the active energy ray-curable ink for offset printing of the present invention is 0.15% by mass or more for improving ink flowability. The content is preferably 0.25% by mass or more, and more preferably 0.35% by mass or more. Additionally, the content is 1.0% by mass or less for keeping toning resistance of ink. The content is preferably 0.95% by mass or less, and more preferably 0.9% by mass or less . When the hydroxy compound is water, the content of the hydroxy compound can be measured with a Karl Fischer moisture. When the hydroxy compound is other than water, it is a volatile component having a molecular weight of 200 or less, so that the content can be determined by gas chromatography/mass spectrometry.

The active energy ray-curable ink for offset printing of the present invention includes one or more hydroxy compound having a molecular weight of 200 or less and containing no (meth) acrylate group. When the ink for offset printing of the present invention has a molecular weight of 200 or less, and includes two or more hydroxy compounds, the total of their contents is used for discussion.

In the active energy ray-curable ink for offset printing of the present invention, when the number of hydroxyl groups derived from the resin having an ethylenic unsaturated group and a hydrophilic group is 100 mol parts, the content of the hydroxy compound having a molecular weight of 200 or less and containing no (meth) acrylate group is preferably 20 mol parts or more for improving ink flowability. The content is more preferably 25 mol parts or more, and even more preferably 30 mol parts or more. Additionally, the content is 120 mol parts or less, more preferably 115 mol parts or less, and even more preferably 110 mol parts or less for keeping toning resistance of the ink. When the active energy ray-curable ink for offset printing includes two or more of the hydroxy compounds having a molecular weight of 200 or less and containing no (meth) acrylate group, the total value of the number of their mol parts is used for discussion.

The polarity parameter ET value (reference: Reichardt, C; Chem Rev 1994, 94, p. 2337 to 2340) of the hydroxy compound having a molecular weight of 200 or less and containing no (meth)acrylate group is preferably 45.0 kcal/mol or more for promoting the action of intermolecular force between the hydroxy compound and the resin having an ethylenic unsaturated group and a hydrophilic group, and improving ink flowability. The ET value is more preferably 47.0 kcal/mol or more, and even more preferably 49.0 kcal/mol or more. Additionally, the ET value is preferably 65.0 kcal/mol or less, more preferably 64.0 kcal/mol or less, and even more preferably 63.5 kcal/mol or less for improving compatibility with the resin having an ethylenic unsaturated group and a hydrophilic group.

When the hydroxy compound having a molecular weight of 200 or less and containing no (meth) acrylate group is a liquid, its viscosity is measured at 25°C using a B type viscometer. When the hydroxy compound is a liquid, its viscosity is preferably 0.1 mPa·s or more for keeping toning resistance of ink. The viscosity is more preferably 0.4 mPa·s or more, and even more preferably 0.7 mPa·s or more. Additionally, the viscosity is preferably 70 mPa·s or less, more preferably 60 mPa·s or less, and even more preferably 50 mPa·s or less for keeping ink flowability.

Specific examples of the hydroxy compound having a molecular weight of 200 or less and containing no (meth) acrylate group include, water, methanol, ethanol, propanol, butanol, pentanol, hexanol, heptanol, octanol, nonanol, decanol, undecanol, dodecanol, tridecanol, 2-propanol , 2-butanol, 2-pentanol, 2-hexanol, 2-heptanol, 2-octanol, 2-nonanol, 2-decanol, 2-undecanol, 2-dodecanol, 2-tridecanol, 3-pentanol, 3-hexanol, 3-heptanol, 3-octanol, 3-nonanol, 3-decanol, 3-undecanol, 3-dodecanol, 3-tridecanol, 4-heptanol, 4-octanol, 4-nonanol, 4-decanol, 4-undecanol, 4-dodecanol, 4-tridecanol, 5-nonanol, 5-decanol, 5-undecanol, 5-dodecanol, 5-tridecanol, 6-undecanol, 6-dodecanol, 6-tridecanol, 7-tridecanol, ethylene glycol, propylene glycol, glycerol, 4-methoxyphenol, 2-methoxy ethanol, 2-ethoxyethanol, 2-butoxyethanol, 2-mercaptoethanol, 2-amino ethanol, 2-cyano ethanol, 2-chloroethanol, 2,2,2-trifluoro ethanol, 2,2,2-trichloroethanol, 1-methoxy-2-propanol, 1-amino-2-propanol, 2-amino-1-butanol, cyclopentanol, cyclohexanol, glycerol, 1,3-butanediol, 1,4-butanediol, 2,3-butanediol, 1,5-pentane diol, diethylene glycol, triethylene glycol, tetraethylene glycol, 2-isopropyl phenol, 2-tert-butylphenol, 4-tert-butylphenol, 2,3-dimethylphenol, 2,4-dimethylphenol, 3,4-dimethylphenol, 3,5-dimethylphenol, 5-isopropyl-2-methylphenol, 2-isopropyl-5-methylphenol, 2-tert-butyl-4-methylphenol, 2,4-di-tert-butylphenol, 2,6-di-tert-butylphenol, 2,3,5-trimethylphenol, 2,3,6-trimethylphenol, 2,6-di-tert-butyl-4-methylphenol, 2-chlorophenol, 4-chlorophenol, 2,6-dichlorophenol, 4-chloro-3-methylphenol, 4-methoxyphenol, 2,6-dimethoxyphenol, 3,5-dimethoxyphenol, 3-acetoxyphenol, 2-(methoxycarbonyl) phenol, 2-(phenoxy carbonyl) phenol, 2-aminophenol, 3-aminophenol, 2-nitrophenol, and 4-cyanophenol, but are not limited to these ones irrespective of a liquid or solid. Among them, preferred examples include water, ethanol, propylene glycol, 2-propanol, and 4-methoxyphenol from the viewpoint of easy availability, low cost, and freeness of risks.

The active energy ray-curable ink for offset printing of the present invention preferably include an acid catalyst in addition to the hydroxy compound having a molecular weight of 200 or less and containing no (meth)acrylate group. The inclusion of the acid catalyst allows the action of an intermolecular force such as a van der Waals force or hydrogen bonding with the resin having an ethylenic unsaturated group and a hydrophilic group, reduces interaction with the resin, and thus improves ink flowability.

Examples of the acid catalyst include carboxylic acids such as methanoic acid, ethanoic acid, propanoic acid, butanoic acid, pentanoic acid, heptanoic acid, octanoic acid, nonanoic acid, decanoic acid, undecanoic acid, dodecanoic acid, 2-propanoic acid, 2-butanoic acid, 2-pentanoic acid, 2-heptanoic acid, 2-octanoic acid, 2-nonanoic acid, 2-decanoic acid, 2-undecanoic acid, 2-dodecanoic acid, 3-pentanoic acid, 3-heptanoic acid, 3-octanoic acid, 3-nonanoic acid, 3-decanoic acid, 3-undecanoic acid, 3-dodecanoic acid, 4-octanoic acid, 4-nonanoic acid, 4-decanoic acid, 4-undecanoic acid, 4-dodecanoic acid, 5-decanoic acid, 5-undecanoic acid, 5-dodecanoic acid, 6-dodecanoic acid, benzoic acid, 2-methylbenzoic acid, 3-methylbenzoic acid, and 4-methylbenzoic acid, and quaternary ammonium cations such as benzyltriethyl ammonium chloride, benzyltriethyl ammonium bromide, and benzyltriethyl ammonium iodide. Among them, quaternary ammonium cations are particularly preferred.

The active energy ray-curable ink for offset printing of the present invention preferably includes a surfactant. The inclusion of a surfactant in the active energy ray-curable ink for offset printing allows intake and emulsification of an appropriate amount (commonly 10 to 20% by mass of total ink amount) of dampening ink during offset printing, whereby repulsiveness of the non-printing part is increased, and toning resistance of the ink is improved.

The ratio between hydrophilic groups and hydrophobic groups of the surfactant is expressed by an HLB value. The HLB value herein represents a value representing the degree of affinity of the surfactant to water and oil, and takes a value from 0 to 20. The closer the HLB value to 0, the higher lipophilicity, and the close to 20, the higher hydrophilicity. The HLB value of the surfactant is preferably 8 or more, and more preferably 10 or more for being soluble in water. Additionally, the HLB value is preferably 18 or less, and more preferably 16 or less for being soluble in the active energy ray-curable ink for offset printing.

Specific examples of the surfactant include polyoxyethylene alkyl ether, polyoxyethylene lauryl ether, polyoxyethylene oleyl ether, polyoxyethylene stearyl ether, polyoxyethylene cetyl ether, polyoxyethylene palmitin ether, polyoxypropylene alkyl ether, polyoxypropylene lauryl ether, polyoxypropylene oleyl ether, polyoxypropylene stearyl ether, polyoxypropylene cetyl ether, polyoxypropylene palmitin ether, polyoxyalkylene alkyl ether, polyoxyalkylene lauryl ether, polyoxyalkylene oleyl ether, polyoxyalkylene stearyl ether, polyoxyalkylene cetyl ether, polyoxyalkylene palmitin ether, mono-, di-, trialkyl ether of sorbitan acid, mono-, di-, trilauryl ether of sorbitan acid, mono-, di-, trioleyl ether of sorbitan acid, mono-, di-, tristearyl ether of sorbitan acid, mono-, di-, tricetyl ether of sorbitan acid, mono-, di-, tripalmitin ether of sorbitan acid, mono-, di-, trialkyl ether of polyoxyethylene sorbitan acid, mono-, di-, trilauryl ether of polyoxyethylene sorbitan acid, mono-, di-, trioleyl ether of polyoxyethylene sorbitan acid, mono-, di-, tristearyl ether of polyoxyethylene sorbitan acid, mono-, di-, tricetyl ether of polyoxyethylene sorbitan acid, mono-, di-, tripalmitin ether of polyoxyethylene sorbitan acid, and polyether modified silicon oil, and those having an HLB value of 8 or more and 18 or less are preferred.

The content of the surfactant in the active energy ray-curable ink for offset printing of the present invention is preferably 0. 01% by mass or more, more preferably 0.05% by mass or more, and even more preferably 0.1% by mass or more for taking dampening water into offset printing and stabilizing the emulsified state. Additionally, the content is preferably 5% by mass or less more preferably 3% by mass or less, even more preferably 1% by mass or less, thereby preventing the active energy ray-curable ink for offset printing from taking an excessive amount of dampening water and being compatible with it during printing.

The active energy ray-curable ink for offset printing of the present invention includes a pigment composed of an organic pigment and/or an inorganic pigment. Specific examples of the organic pigment include phthalocyanine-based pigments, soluble azo-based pigments, insolubleazo-based pigments, lake pigments, quinacridone-based pigments, isoindoline-based pigments, threne-based pigments, and metal complex-based pigments. Specific examples of them include phthalocyanine blue, phthalocyanine green, azo red, monoazo red, monoazo yellow, disazo red, disazo yellow, quinacridone red, quinacridone magenta, and isoindoline yellow.

Examples of the inorganic pigment include titanium oxide, zinc oxide, alumina white, calcium carbonate, barium sulfate, red oxide, cadmium red, chrome yellow, zinc yellow, Berlin blue, ultramarine blue, oxide coating glass powder, oxide coatingmica, oxide coating metal particles, aluminum powder, gold powder, silver powder, copper powder, zinc powder, stainless steelpowder, nickel powder, organic bentonite, iron oxide, carbon black, and graphite.

For inks that are printed as base colors for transparent plastic films, white pigments such as titanium dioxide, zinc oxide, and alumina white imparting hiding power are preferred.

The particle size of the white pigment is preferably 200 nm or more and 300 nm or less which minimizes the transmittance of visible light through scattering.

The content of the pigment in the active energy ray-curable ink for offset printing of the present invention is, when an organic pigment having specific gravity of 2 or less or carbon black is used, preferably 5% by mass or more, more preferably 10% by mass or more, and even more preferably 15% by mass or more for achieving certain printing density. Additionally, the content is preferably 50% by mass or less, more preferably 45% by mass or less, and even more preferably 40% by mass or less, thereby improving ink flowability and good transferability. When an inorganic pigment having specific gravity of greater than 2 is used, the content is preferably 20% by mass or more, more preferably 30% by mass or more, and even more preferably 40% by mass or more for achieving certain printing density, Additionally, the content is preferably 70% by mass or less, more preferably 60% by mass or less, and even more preferably 50% by mass or less, thereby improving ink flowability and achieving good transferability.

The active energy ray-curable ink for offset printing of the present invention may include a sensitizing agent. Specific examples of the sensitizing agent include 2-methylthioxanthone, 2-chlorothioxanthone, 2,4-diethylthioxanthone, isopropyl thioxanthone, 2,4-dichlorothioxanthone, 2,3-bis(4-diethyl amino benzal) cyclopentanone, 2,6-bis(4-dimethylaminobenzal) cyclohexanone, 2,6-bis(4-dimethylamino benzal)-4-methylcyclohexanone, 4,4-bis(dimethylamino)-benzophenone (synonym: Michler ketone), 4,4-bis(diethylamino)-benzophenone, 4,4-bis(dimethylamino)chalcone, 4,4-bis(diethyl amino) chalcone, p-dimethylaminocinnamylidene indanone, p-dimethylaminobenzylidene indanone, 2-(p-dimethylaminophenylvinylene)-isonaphthothiazole, 1,3-bis(4-dimethylaminobenzal)acetone, 1,3-carbonyl-bis(4-diethylaminobenzal)acetone, 3,3-carbonyl-bis(7-diethylaminocoumarin), N-phenyl-N-ethyl ethanolamine, N-phenylethanolamine, N-tolyl diethanolamine, isoamyl dimethylaminobenzoate, diethylaminobenzoic acid isoamyl, diethylaminobenzoic acid methyl, diethylaminobenzoic acid ethyl, diethylaminobenzoic acid isoamyl, 3-phenyl-5-benzoylthiotetrazole, and 1-phenyl-5-ethoxycarbonylthiotetrazole.

When a sensitizing agent is added, the content is preferably 0.1% by mass or more, more preferably 1% by mass or more, and even more preferably 3% by mass or more of the active energy ray-curable ink for offset printing for achieving good sensitivity of the active energy ray-curable ink for offset printing. Additionally, the content is preferably 20% by mass or less, more preferably 15% by mass or less, and even more preferably 10% by mass or less of the active energy ray-curable ink for offset printing for improving storage stability of the active energy ray-curable ink for offset printing.

The active energy ray-curable ink for offset printing of the present invention preferably includes a polymerization inhibitor. Specific examples of the polymerization inhibitor include hydroquinone, monoesterified hydroquinone, N-nitrosodiphenylamine, phenothiazine, p-t-butyl catechol, N-phenylnaphthylamine, 2,6-di-t-butyl-p-methylphenol, chloranil, and pyrogallol. When a polymerization inhibitor is added, its content is preferably 0.001% by mass or more of the active energy ray-curable ink for offset printing for achieving good storage sensitivity of the active energy ray-curable ink for offset printing, and preferably 5% by mass or less for achieving good sensitivity.

The active energy ray-curable ink for offset printing of the present invention preferably include one or more of the components selected from silicon liquids, alkyl (meth) acrylates, vegetable oil, vegetable oil-derived from fatty acid esters, hydrocarbon-based solvents, and fluorocarbons. More preferably, it includes one or more components selected from silicon liquids, alkyl (meth)acrylates, hydrocarbon-based solvents, and fluorocarbons.

The component has an effect of decreasing ink adhesiveness to silicon rubber which is a non-printing part of a waterless offset printing plate. The reason for the decrease in ink adhesiveness to the silicone rubber is likely as follows. More specifically, the above-described component included in the ink is diffused from the ink upon contact with the silicone rubber surface, and covers the silicone rubber surface in the form of a thin film. The thin film thus formed likely inhibits adhesiveness of ink to the silicone rubber surface, and prevents toning on the silicon surface.

Of the above-described components, alkyl (meth)acrylates are preferred because they are cured by irradiation with an active energy ray to improve water resistance of the cured film of ink, and improves sensitivity to an active energy ray.

Specific compounds of the components are as follows.

Examples of the silicon liquids include dimethylsilicon, methylphenyl silicon, alkyl-modified silicon, polyether modified silicon, aralkyl modified silicon, fatty acid amide-modified silicon, fatty acid ester-modified silicon, fluoroalkyl-modified silicon, methylhydrogen silicon, silanol-modified silicon, alcohol-modified silicon, amino-modified silicon, epoxy-modified silicon, epoxy polyether-modified silicon, phenol-modified silicon, carboxy-modified silicon, and mercapto-modified silicon.

Examples of the alkyl (meth)acrylates include nonyl (meth)acrylate, decyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, and isooctadecyl (meth)acrylate. The alkyl group of the alkyl (meth)acrylate has a carbon number of preferably 5 to 24, and more preferably 6 to 21.

Examples of the vegetable oil include soybean oil, linseed oil, safflower oil, tung oil, tall oil, and dehydrated castor oil.

Examples of the vegetable oil-derived fatty acid ester include alkyl esters having a carbon number of about 1 to 10 such as methyl, ethyl, propyl, isopropyl, butyl, isobutyl, tert-butyl, and 2-ethylhexyl of fatty acids having an alkyl backbone with a carbon number of about 15 to 20 such as stearic acid, isostearic acid, hydroxy stearic acid, oleic acid, linolic acid, linolenic acid, and eleostearic acid.

Examples of the hydrocarbon-based solvent include polyolefin oil, naphthene oil, and paraffin oil.

Examples of the fluorocarbons include 1,1,1,2,2-pentafluoroethane, 1,1,1,2,2,3,3,4,4-nonafluorobutane, 1,1,1,2,2,3,3,4,4,5,5,6,6-tridecafluorohexane, 1,1,1,2,2,3,3,4,4,5,5,6,6,7,7,8,8-heptadecafluorooctane, 1,1,1,2,3,3,3-heptafluoropropane, 1,1,1,2,3,3,4,4-octafluoro-2-trifluoromethyl butane, 1,1,1,2,3,3,4,4,5,5,6,6-dodecafluoro-2-trifluoromethyl hexane, 1,1,2,2-tetrafluoroethane, 1,1,2,2,3,3,4,4-octafluorobutane, and 1,1,2,2,3,3,4,4,5,5,6,6-dodecafluorohexane.

The active energy ray-curable ink for offset printing of the present invention preferably include at least one component selected from the above-described silicon liquids, alkyl (meth)acrylates, vegetable oils, vegetable oil-derived fatty acid esters, hydrocarbon-based solvents, and fluorocarbons in an amount of 0.5% by mass or more for improving toning resistance. The content is more preferably 1% by mass or more, and even more preferably 2% by mass or more. Additionally, the content is preferably 10% by mass or less for improving storage stability of the active energy ray-curable ink for offset printing. The content is more preferably 8% by mass or less, and even more preferably 5% by mass or less.

The active energy ray-curable ink for offset printing of the present invention preferably include a pigment dispersant for increasing pigment dispersibility. The optimum content varies depending on, for example, the density, particle size, and surface area of the pigment used. The pigment dispersant acts on the surface of the pigment, and suppresses coagulation of the pigment. This increases pigment dispersibility, and improves flowability of the active energy ray-curable ink for offset printing.

Specific examples of the pigment dispersant include, "Anti-Terra-U", "Anti-Terra-203/204", "Disperbyk-101, 102, 103, 106, 107, 110, 111, 115, 118, 130, 140, 142, 145, 161, 162, 163, 164, 165, 166, 167, 168, 170, 171, 174, 180, 181, 182, 184, 185, 187, 190, 191, 192, 193, 199, 2000, 2001, 2008, 2009, 2010, 2012, 2013, 2015, 2022, 2025, 2026, 2050, 2055, 2060, 2061, 2070, 2096, 2150, 2151, 2152, 2155, 2163, 2164, 2200, 2205, 9067, 9076", "Bykumen", "BYK-P104, P105", "P104S, 240S", and "Lactimon" manufactured by BYK Chemie.

Other examples include EFKA 44, 46, 47, 48, 49, 54, 63, 64, 65, 66, 71, 701, 764, 766", and "EFKA POLYMER 100, 150, 400, 401, 402, 403, 450, 451, 452, 453, 745" manufactured by Efka CHEMICALS, "FLOWLEN TG-710, "FLOWNON SH-290, SP-1000", and "POLYFLOW No. 50E, No. 300" manufactured by Kyoeisha Chemical Co., Ltd., and "DISPARLON 325, KS-860, 873SN, 874, 1401, #2150, #7004" manufactured by Kusumoto Chemicals, Ltd.

Yet other examples include "DEMOL RN, N, MS, C, SN-B, EP", "HOMOGENOL L-18, "EMULGEN 920, 930, 931, 935, 950, 985", "ACETAMIN 24, 86" manufactured by Kao Corporation, "SOLSPERSE 5000, 13940, 17000, 24000GR, 32000, 33000, 39000, 41000, 53000" manufactured by Avecia Limited., and "AJISPAR PB821, 822, and 824" Ajinomoto Fine-Techno Co., Inc.

The content of the pigment dispersant is preferably 5% by mass or more and 50% by mass or less with reference to the pigment for improving flowability of the active energy ray-curable ink for offset printing.

The active energy ray-curable ink for offset printing of the present invention may include, as necessary, additives such as a wax, an anti-foaming agent, a transferability improver, and a leveling agent.

The viscosity of the active energy ray-curable ink for offset printing of the present invention is measured at 25°C using a cone plate rotary viscometer. The viscosity (A) at a rotation speed of 0.5 rpm is preferably 5 Pa·s or more and 100 Pa·s or less. When the viscosity (A) is 5 Pa·s or more, ink tends to exhibit good transferability between rollers. The viscosity is more preferably 10 Pa·s or more, and even more preferably 20 Pa·s or more. Additionally, when the viscosity (A) is 100 Pa·s or less, the ink has good flowability, and especially a white ink has improved hiding power . The viscosity is more preferably 80 Pa·s or less, and even more preferably 60 Pa·s or less. The viscosity (B) at a rotation speed of 50 rpm is preferably 10 Pa·s or more and 40 Pa·s or less. When the viscosity (B) is 10 Pa·s or more, toning resistance of ink is improved. The viscosity is more preferably 15 Pa·s or more, and even more preferably 20 Pa·s or more. Additionally, when the viscosity (B) is 40 Pa·s or less, transferability of the ink to a planographic printing plate (inking properties to the printing part) is improved. The viscosity is more preferably 35 Pa·s or less, and even more preferably 30 Pa·s or less. The ratio of the viscosity (B) to the viscosity (A), or the viscosity ratio (B)/(A) is preferably 0.25 or more and 0.4 or less, more preferably 0.30 or more and 0.4 or less, and even more preferably 0.35 or more and 0.4 or less. When the viscosity ratio (B) / (A) is within the above-described range, both of toning resistance and flowability of ink are achieved, and the use of the ink provides high quality printed matters with no background stain and smooth image parts.

The method for producing the active energy ray-curable ink for offset printing of the present invention is described below. The active energy ray-curable ink for offset printing of the present invention is obtained by dissolving a pigment, a polyfunctional (meth) acrylate having a hydroxyl group, a resin having an ethylenic unsaturated group and a hydrophilic group, a (meth) acrylate preferably having an alicyclic skeleton or an aliphatic skeleton with a carbon number of 6 to 18, and other components with warming as necessary at 5 to 100°C, and then uniformly mixing and dispersing them with a stirring or mulling machine such as a kneader, a three roll mill, a ball mill, a planetary ball mill, a bead mill, a roll mill, an attritor, a sand mill, a gate mixer, a paint shaker, a homogenizer, or a self-revolving stirrer. After mixing and dispersion, or during mixing and dispersion, defoaming in vacuum or under reduced pressure is preferred.

The method for producing a printed matter using the active energy ray-curable ink for offset printing of the present invention is as follows. Firstly, a printed matter having an ink coating film is obtained by applying the active energy ray-curable ink for offset printing of the present invention to a substrate. The method may further include a step of irradiating the ink coating film made of the active energy ray-curable ink for offset printing applied to the substrate with an active energy ray.

The active energy ray-curable ink for offset printing of the present invention can instantaneously cures the ink coating film on a printed matter by irradiation with an active energy ray. The active energy ray may any one as long as it has excitation energy necessary for curing reaction, and preferably, for example, UV light or an electron beam. When an electron beam is used for curing, an electron beam apparatus having an energy ray of 100 to 500 eV is preferably used. When UV light is used for curing, a UV irradiation apparatus such as a high pressure mercury lamp, a xenon lamp, a metal halide lamp, or a light emitting diode is preferably used. The use of a light emitting diode emitting a bright line with a wavelength of 350 to 420 nm is preferred from the viewpoints of power saving and cost reduction.

Examples of the substrate include art paper, coated paper, cast paper, synthetic paper, newsprint paper, aluminum-metalized paper, metals, and plastic films. The active energy ray-curable ink for offset printing of the present invention has marked transferability to a plastic film. Examples of the plastic film include films of plastics such as polyethylene terephthalate, polyethylene, polyester, polyamide, polyimide, polystyrene, polypropylene, polycarbonate, and polyvinyl acetal, and plastic film-laminated paper made by laminating any of the above-described plastic films to paper, and metalized plastic films made by depositing a metal such as aluminum, zinc, or copper on a metal. The active energy ray-curable ink for offset printing of the present invention exhibits good transferability particularly to a film made of polypropylene.

These plastic films are preferably subjected to surface treatment such as coating with a primer resin, corona discharge treatment, or plasma treatment for imparting easy adhesiveness.

The thickness of the substrate is, when used for soft packaging, preferably 5 pm or more, and more preferably 10 um or more, from the viewpoint of mechanical strength of the substrate necessary for printing. Additionally, the thickness is preferably 50 um or less, and even more preferably 30 um or less for reducing the cost of the substrate.

The active energy ray-curable ink for offset printing of the present invention can be applied to a substrate by a known method such as flexographic printing, offset printing, gravure printing, screen printing, or bar coating. In particular, offset printing is preferred, and the method of offset printing may be with water or waterless printing. The substrate may be a sheet or roll film. When a thin film for soft packaging is used for printing, printing is preferably carried out using a roll film in a roll-to-roll manner.

The thickness of the ink coating film (ink cured film) on the printed matter is preferably from 0.1 to 50 um. When the thickness of the ink coating film is within the above-described range, ink cost can be reduced while good print quality is being kept.

### Examples

The present invention is specifically described by examples. However, the present invention will not be limited to them.

### <Ink raw material>

Pigment 1 (white ink): TIPAQUE CR57 (manufactured by Ishihara Sangyo Kaisha, Ltd.)
Pigment 2 (indigo ink): SEIKA CYANINE BLUE 4920 (manufactured by Dainichiseika Color & Chemicals Mfg. Co., Ltd.)
Pigment 3 (indigo ink) : LIONOL BLUE FG7330 (manufactured by Toyocolor Co., Ltd.)
Pigment 4 (Red ink): SEIKA BRILLIANT CARMINE 6B1483LT (manufactured by Dainichiseika Color & Chemicals Mfg. Co., Ltd.)
Body pigment: "MICRO ACE" (registered trademark) P-3 (manufactured by Nippon Talc Co., Ltd.)
Polyfunctional (meth)acrylate 1: a polyfunctional (meth)acrylate having a hydroxyl group, a mixture of pentaerythritol triacrylate and pentaerythritol tetraacrylate "Miramer" (registered trademark) M340 (manufactured by Miwon Specialty Chemical Co., Ltd.), hydroxyl value 115 mgKOH/g
Polyfunctional (meth)acrylate 2: a polyfunctional (meth)acrylate having a hydroxyl group, a mixture of dipentaerythritol pentaacrylate and dipentaerythritol hexaacrylate "ARONIX" (registered trademark) M-402 (manufactured by Toagosei Co., Ltd.), hydroxyl value : 28 mgKOH/g
Polyfunctional (meth)acrylate 3: a polyfunctional (meth)acrylate having a hydroxyl group, a mixture of dipentaerythritol pentaacrylate and dipentaerythritol hexaacrylate "ARONIX" (registered trademark) M-403A (manufactured by Toagosei Co., Ltd.), hydroxyl value : 53 mgKOH/g
Polyfunctional (meth)acrylate 4: a polyfunctional (meth)acrylate having a hydroxyl group, a mixture of pentaerythritol triacrylate and pentaerythritol tetraacrylate "ARONIX" (registered trademark) M-306 (manufactured by Toagosei Co., Ltd.), hydroxyl value: 171 mgKOH/g
Polyfunctional (meth)acrylate 5: a polyfunctional (meth) acrylate having a hydroxyl group, glycerol dimethacrylate "NK ESTER" (registered trademark) 701 (manufactured by Shin-Nakamura chemical Co., Ltd.), hydroxyl value: 224 mgKOH/g
Polyfunctional (meth)acrylate 6: a polyfunctional (meth) acrylate having a hydroxyl group, a mixture of diglycerol triacrylate and diglycerol tetraacrylate, hydroxyl value: 119 mgKOH/g
Polyfunctional (meth)acrylate 7: a polyfunctional (meth)acrylate having a hydroxyl group, a mixture of ditrimethylolpropane triacrylate and ditrimethylolpropane tetraacrylate, hydroxyl value: 102 mgKOH/g
Polyfunctional (meth)acrylate 8: a pentaerythritol tetraacrylate ethylene oxide adduct having no hydroxyl group "Miramer" (registered trademark) M4004 (manufactured by Miwon Specialty Chemical Co., Ltd.)
Polyfunctional (meth)acrylate 9: a (meth)acrylatehaving an alicyclic skeleton, tricyclodecane dimethanol diacrylate "NK ESTER" (registered trademark) A-DCP (Shin-Nakamura chemical Co., Ltd.)
Polyfunctional (meth)acrylate 10: a (meth)acrylate having an aliphatic skeleton with a carbon number of 6, 1,6-hexanediol diacrylate "NK ESTER" (registered trademark) A-HD-N (Shin-Nakamura chemical Co., Ltd.)
Polyfunctional (meth)acrylate 11: a (meth)acrylate having an alicyclic skeleton, isobornyl acrylate "NK ESTER" (registered trademark) A-IB (Shin-Nakamura chemical Co., Ltd.)
Polyfunctional (meth)acrylate 12: a (meth)acrylate having an alicyclic skeleton, 3,3,5-trimethylcyclohexyl acrylate "Miramer" (registered trademark) M1130 (manufactured by Miwon Specialty Chemical Co., Ltd.)
Polyfunctional (meth)acrylate 13: a (meth)acrylate having an alicyclic skeleton, tricyclodecane acrylate "FANCRYL" (registered trademark) 513-AS (Hitachi Chemical Co., Ltd.)
Rosin (meth)acrylate 1: a (meth)acrylate having a hydroxyl group and a rosin skeleton "BANBEAM "(registered trademark) UV-22A (manufactured by Harima Chemicals Group, Inc.), hydroxyl value: 84 mgKOH/g
Rosin (meth)acrylate 2: a (meth)acrylate having a hydroxyl group and a rosin skeleton, BANBEAMUV-22C (manufactured by Harima Chemicals Group, Inc.), functional group number: 2 to 3, hydroxyl value: 70 mgKOH/g, weight average molecular weight: 760
Rosin (meth)acrylate 3: a (meth)acrylate having a hydroxyl group and a rosin skeleton, BEAMSET BS-101 (manufactured by Arakawa Chemical Industries, Ltd.) functional group number: 1, hydroxyl value: 125 mgKOH/g, weight average molecular weight: 430
Rosin (meth)acrylate 4: a (meth)acrylate having a hydroxyl group and a rosin skeleton, a reaction product obtained by adding 1.0 equivalent glycidyl methacrylate (GMA) to hydroxyl groups of PINE CRYSTAL KE-615-3 (manufactured by Arakawa Chemical Industries, Ltd., rosin-containing diol) . Number of functional groups: 2, hydroxyl value: 32 mgKOH/g, weight average molecular weight: 1100
Rosin (meth)acrylate 5: a (meth)acrylate having a hydroxyl group and a rosin skeleton, a reaction product obtained by esterifying dimerized rosin with 0.5 equivalent pentaerythritol, and then adding 1.0 equivalent glycidyl methacrylate (GMA) to the hydroxyl groups. The functional group number: 2 to 4, hydroxyl value: 53 mgKOH/g, weight average molecular weight: 3500
Resin 1: Carboxyl groups of a copolymer composed of 25% by mass of methyl methacrylate, 25% by mass of styrene, and 50% by mass of methacrylic acid were subjected to addition reaction with 0.6 equivalent glycidyl methacrylate, thereby obtaining a resin 1 having an ethylenic unsaturated group and a hydrophilic group. The resin 1 thus obtained has a weight average molecular weight of 34,000, an acid value of 102 mgKOH/g, and an iodine value of 2.0 mol/kg.
Resin 2: Carboxyl groups of a copolymer composed of 25% by mass of methyl methacrylate, 25% by mass of styrene, and 50% by mass of methacrylic acid were subjected to subjected to addition reaction with 1.0 equivalent glycidyl methacrylate, thereby obtaining a resin 2 having an ethylenic unsaturated group. The resin 2 thus obtained had a weight average molecular weight of 40,000, an acid value of 0 mgKOH/g, and an iodine value of 3.2 mol/kg.
Resin 3: Carboxyl groups of a copolymer composed of 25% by mass of methyl methacrylate, 25% by mass of styrene, and 50% by mass of methacrylic acid were subjected to addition reaction with 0.95 equivalent glycidyl methacrylate, thereby obtaining a resin 3 having an ethylenic unsaturated group and a hydrophilic group. The resin 3 thus obtained had a weight average molecular weight of 39,000, an acid value of 10 mgKOH/g, and an iodine value of 3.1 mol/kg.
Resin 4: Carboxyl groups of a copolymer composed of 25% by mass of methyl methacrylate, 25% by mass of styrene, and 50% by mass of methacrylic acid were subjected to addition reaction with 0.9 equivalent glycidyl methacrylate, thereby obtaining a resin 4 having an ethylenic unsaturated group and a hydrophilic group. The resin 4 thus obtained had a weight average molecular weight of 38,000, an acid value of 35 mgKOH/g, and an iodine value of 2.9 mol/kg.
Resin 5: Carboxyl groups of a copolymer composed of 25% by mass of methyl methacrylate, 25% by mass of styrene, and 50% by mass of methacrylic acid were subjected to addition reaction with 0.8 equivalent glycidyl methacrylate, thereby obtaining a resin 5 having an ethylenic unsaturated group and a hydrophilic group. The resin 5 thus obtained had a weight average molecular weight of 37,000, an acid value of 62 mgKOH/g, and an iodine value of 2.5 mol/kg.
Resin 6: Carboxyl groups of a copolymer composed of 25% by mass of methyl methacrylate, 25% by mass of styrene, and 50% by mass of methacrylic acid were subjected to addition reaction with 0.4 equivalent glycidyl methacrylate, thereby obtaining a resin 6 having an ethylenic unsaturated group and a hydrophilic group. The resin 6 thus obtained had a weight average molecular weight of 32,000, an acid value of 190 mgKOH/g, and an iodine value of 1.0 mol/kg.
Resin 7: Carboxyl groups of a copolymer composed of 25% by mass of methyl methacrylate, 25% by mass of styrene, and 50% by mass of methacrylic acid were subjected to addition reaction with 0.2 equivalent glycidyl methacrylate, thereby obtaining a resin 7 having an ethylenic unsaturated group and a hydrophilic group. The resin 7 thus obtained had a weight average molecular weight of 31,000, an acid value of 240 mgKOH/g, and an iodine value of 0.5 mol/kg.
Resin 8: Carboxyl groups of a copolymer composed of 25% by mass of methyl methacrylate, 25% by mass of styrene, and 50% by mass of methacrylic acid were subjected to addition reaction with 0.1 equivalent glycidyl methacrylate, thereby obtaining a resin 8 having an ethylenic unsaturated group and a hydrophilic group. The resin 8 thus obtained had a weight average molecular weight of 30,000, an acid value of 259 mgKOH/g, and an iodine value of 0.25 mol/kg.
Resin 9: A copolymer composed of 25% by mass of methyl methacrylate, 25% by mass of styrene, and 50% by mass of methacrylic acid (resin 9) was obtained. The resin 9 having a hydrophilic group thus obtained had a weight average molecular weight of 29, 000, an acid value of 282 mgKOH/g, an iodine value of 0 mol/kg.
Resin 10: Carboxyl groups of a copolymer composed of 28% by mass of methyl methacrylate, 28% by mass of styrene, and 44% by mass of methacrylic acid were subjected to addition reaction with 0.5 equivalent glycidyl methacrylate, thereby obtaining a resin 10 having an ethylenic unsaturated group and a hydrophilic group . The resin 10 thus obtained had a weight average molecular weight of 30, 000, an acid value of 105 mgKOH/g, a hydroxyl value of 210 mgKOH/g, and an iodine value of 1.9 mol/kg.
Photopolymerization initiator 1: acylphosphine oxide compound, 2,4,6-trimethylbenzoyl-diphenyl-phosphine oxide "LUCIRIN" (registered trademark) TPO (manufactured by BASF), 385 nm absorption: present
Photopolymerization initiator 2: acylphosphine oxide compound, bis(2,4,6-trimethylbenzoyl)-phenyl-phosphine oxide "IRGACURE" (registered trademark) 819 (manufactured by BASF), 385 nm absorption: present
Photopolymerization initiator 3: acylphosphine oxide compound, bis(2,6-dimethoxybenzoyl)-2,4,4-trimethylpentyl-phosphine oxide "IRGACURE" (registered trademark) 1700 (manufactured by BASF), 385 nm absorption: present
Photopolymerization initiator 4: acylphosphine oxide compound, diphenyl-benzoyl phosphine oxide, 385 nm absorption: present
Photopolymerization initiator 5: 2-[4-(methylthio)benzoyl]-2-(4-morpholinyl)propane "IRGACURE" (registered trademark) 907 (manufactured by BASF), 385 nm absorption: absent
Photopolymerization initiator 6: 1-hydroxycyclohexyl-phenyl ketone "IRGACURE" (registered trademark) 184 (manufactured by BASF), 385 nm absorption: absent
Photopolymerization initiator 7: 2,4-diethylthioxanthene-9-one "KAYACURE" (registered trademark) DETX-S (manufactured by Nippon Kayaku Co., Ltd.), 385 nm absorption: present
Polymerization inhibitor 1: p-methoxyphenol (manufactured by Wako Pure Chemical Industries, Ltd.)
Polymerization inhibitor 2: N-nitrosodiphenyl amine (manufactured by Wako Pure Chemical Industries, Ltd.)
Hydroxy compound 1: pure water (manufactured by Wako Pure Chemical Industries, Ltd.), molecular weight 18
Hydroxy compound 2: ethanol (manufactured by Wako Pure Chemical Industries, Ltd.), molecular weight 46
Hydroxy compound 3: 2-propanol (manufactured by Wako Pure Chemical Industries, Ltd.), molecular weight 60
Hydroxy compound 4: ethylene glycol (manufactured by Wako Pure Chemical Industries, Ltd.), molecular weight 62
Hydroxy compound 5: propylene glycol (manufactured by Wako Pure Chemical Industries, Ltd.), molecular weight 76
Hydroxy compound 6: 2,6-di-tert-butyl-4-methylphenol (manufactured by Wako Pure Chemical Industries, Ltd. ) , molecular weight 220
Acid catalyst 1: acetic acid (manufactured by Wako Pure Chemical Industries, Ltd.), molecular weight 60
Acid catalyst 2: benzyl triethyl ammonium chloride (manufactured by Tokyo Chemical Industry Co., Ltd. ) , molecular weight 228
Solvent: toluene (manufactured by Wako Pure Chemical Industries, Ltd.), no hydroxy group, molecular weight 92
Surfactant: "RHEODOL" (registered trademark) TW-L120 (manufactured by Kao Corporation), HLB value 16.7
Pigment dispersant: "Disperbyk" (registered trademark) 111 (manufactured by BYK-Chemie)
Additive 1: ethyl oleate (manufactured by Wako Pure Chemical Industries, Ltd.)
Additive 2: lauryl acrylate (manufactured by Wako Pure Chemical Industries, Ltd.)
Wax: "KTL" (registered trademark) 4N (manufactured by Kitamura Limited)

### <Measurement of weight average molecular weight>

The weight average molecular weight of the resin was the value measured by gel permeation chromatography (GPC) using tetrahydrofuran as the mobile phase. GPC used HLC-8220 (manufactured by Tosoh Corporation) , columns used TSKgel Super HM-H (manufactured by Tosoh Corporation), TSK gel SuperHM-H (manufactured by Tosoh Corporation), and TSK gel Super H2000 (manufactured by Tosoh Corporation) which were connected in this order, and RI detection used an RI detector integrated in the above-described GPC. The calibration curve was drawn using a polystyrene reference material, and the weight average molecular weight of the sample was calculated. The method for preparing the sample is as follows. The sample was diluted with tetrahydrofuran to make the concentration 0.25% by mass, the diluted solution was stirred with a mix rotor (MIX-ROTAR VMR-5, manufactured by AS ONE Corporation) for 5 minutes at 100 rpm, filtered through a 0.2-µm filter (Z227536-100EA, manufactured by SIGMA), and the filtrate was used as the sample. The measurement conditions are as follows; the injection volume was 10 µL, the analysis time was 30 minutes, the flow rate was 0.4 mL/min, and the column temperature was 40°C.

### <Waterless printing test>

A waterless offset printing plate (TAC-VG5, manufactured by Toray Industries, Inc.) was mounted on an offset rotary printing machine (MHL13A, manufactured by manufactured by Miyakoshi Printing Machinery Co., Ltd.), and the inks of Examples 1 to 57, 60 to 75, and Comparative Examples 1 to 13 were printed onOPPfilm ("PYLEN" (registered trademark) P2111, film thickness 20 µm, corona-treated, manufactured by Toyobo Co., Ltd.) at a printing rate of 50 m/minute for 2000 m.

### <Printing test with water>

An offset printing plate (XP-F, manufactured by Fujifilm Corporation) was mounted on an offset rotary printing machine (MHL13A, manufactured by Miyakoshi Printing Machinery Co., Ltd.), and the ink of Examples 58 and 59 was printed on an OPP film for 2000 m at a printing speed of 50 m/minute, using tap water containing 3% by mass of an etchant (SOLAIA-505, manufactured by T&K TOKA Corporation) as dampening water.

The method for evaluating the active energy ray-curable ink for offset printing of the present invention is as follows.

### (1) Ink viscosity

A cone plate (cone angle 1°, diameter = 40 mm) was mounted on a rheometer MCR301 manufactured by Anton Paar, and the viscosity of the ink of 0.15 ml taken with an ink pipette was measured at 25°C and 0.5 rpm (A) and 50 rpm (B).

### (2) Toning resistance (reflected density in non-printing part)

White ink: Using black fine paper as paper white (the reference of reflected density 0), when the reflected density in the solid image of a printed matter was -1.0, the color density in the non-printing part was evaluated using a reflection densitometer (SpectroEye, manufactured by GretagMacbeth) . Toning resistance is good when the reflected density is -0.15 or more, and toning resistance is very good when the reflected density is -0.05 or more.

Indigo and red inks: Using fine paper as paper white (the reference of reflected density 0), when the reflected density in the solid image of a printed matter was 2.0, the color density in the non-printing part was evaluated using a reflection densitometer (SpectroEye, manufactured by GretagMacbeth) . Toning resistance is good when the reflected density is 0.15 or less, and toning resistance is very good when the reflected density is 0.05 or less.

### (3) Inking properties (hollow hole resistance)

The inking properties on the solid image of a printed matter was visually observed through a micrometer scope (magnification × 25, Sugitoh Co., Ltd.), and rated on a 1-to-3 scale. The evaluation criteria are as follows.
3: Hollow holes are scarcely found (good).
2: Some hollow holes are found.
1: Many hollow holes are found even by visual observation.

### (4) Hiding power (haze)

For the white inks of Examples 1 to 10 and Comparative Examples 1 to 3, the haze (cloudiness) of the solid image of a printed matter was measured using a haze meter (HGM-2DP, manufactured by Suga Test Instrument Co., Ltd.). The hiding power is good when the haze is 80% or more, and the hiding power is very good when the haze is 85% or more.

### (5) Curing sensitivity to UV light at 385 nm

0.2 g of ink was transferred to OPP film using an RI tester (PI-600, manufactured by Tester Sangyo Co. , Ltd.), and irradiated with UV light at a belt conveyor speed of 0 to 150 m/minute using a light emitting diode-UV irradiation apparatus UD90 (radiation intensity: 8W/cm², irradiation wavelength: 385 nm) manufactured by Panasonic Industrial Devices SUNX Co., Ltd. After two hours, the belt conveyor speed was determined when the ink on the printed matter was thoroughly cured and did not peel even a cellophane adhesive tape ("CELLOTAPE" (registered trademark) No. 405) was attached to and released from the ink. The faster the belt conveyor speed, the higher the sensitivity because the ink is cured with a less amount of exposure dose . When the belt conveyor speed was less than 60 m/minute, the sensitivity was rated as insufficient, when 60 m/minute or more and less than 100 m/minute, the sensitivity was rated good, and when 100 m/minute or more, the sensitivity was rated as very good.

### (6) Adhesiveness (laminate peel strength)

0.1 g of ink was transferred to OPP film using an RI tester (PI-600, manufactured by Tester Sangyo Co., Ltd.), and cured at a belt conveyor speed of 10 m/minute using a light emitting diode-UV irradiation apparatus UD90 (radiation intensity: 8 W/cm2, irradiation wavelength: 385 nm) manufactured by Panasonic Industrial Devices SUNX Co., Ltd. A laminate film (LL-XMTN, manufactured by Futamura Chemical Co., Ltd., thickness: 30 µm) was coated with DIC DRY LX500/KR-90S (mixed at a weight ratio of 15/1, both are manufactured by DIC Corporation), dried at 60°C for 1 minute, followed by laminating to a printed matter, and dried at 40°C for 40 hours. A piece for evaluation with a width of 15 mm was cut from the laminated printed matter, peeled using a tensile tester (TENSILON UTA-500, manufactured by Orientec Corporation) at 30 cm/min and 180°, and the maximum stress was recorded as the peel strength. When the peel strength was less than 1.0 N/15 mm, the adhesiveness was rated as insufficient, and when 1.5 N/15 mm or more and less than 2.0 N/15 mm, the adhesiveness was rated as good, and when 2.0 N/15 mm or more, the adhesiveness was rated as very good.

### [Example 1]

An ink composition including a pigment, a polyfunctional (meth)acrylate, a resin, and a photopolymerization initiator shown in Table 1 was weighed, passed through a three roll mill "EXAKT" (registered trademark) M-80S (manufactured by EXAKT) at gap 1, thereby obtaining active energy ray-curable ink for offset printing.

The active energy ray-curable ink for offset printing thus obtained was evaluated for the ink viscosity and curing sensitivity (conveyor speed) as described above. Additionally, waterless printing test was carried out, and toning resistance (reflected density in the non-printing part) was evaluated. The printed matter was evaluated for the inking properties, hiding power (haze), and film adhesiveness. The viscosity (A) of the active energy ray-curable ink for offset printing thus made at 0.5 rpm was 21 Pa·s. The reflected density in the non-printing part was -0.04, indicating that the toning resistance was very good. For the inking properties, hollow holes were scattered, and the sensitivity was 150 m/minute and very good. The hiding power was 84% and good. Adhesiveness to OPP film was 1.1 N/15 mm and good.

### [Examples 2 to 10]

The same operation and the evaluation of viscosity, toning resistance, inking properties, hiding power, sensitivity, and adhesiveness were carried out in the same manner as in Example 1, except that the ink composition was changed as given in Table 1. The inclusion of a (meth)acrylate having an alicyclic skeleton or an aliphatic skeleton with a carbon number of 6 to 18 improved inking property, hiding power, and adhesiveness in comparison with Example 1, while toning resistance tended to decrease because of the decrease of viscosity. The tendency became more noticeable with the increase of the content of the (meth)acrylate having an alicyclic skeleton or an aliphatic skeleton with a carbon number of 6 to 18. Among the (meth)acrylates having an alicyclic skeleton or an aliphatic skeleton with a carbon number of 6 to 18, the higher the number of acrylate group, the higher the sensitivity became. In particular, when tricyclodecane dimethanol diacrylate using was used, very good hiding power and adhesiveness were achieved, while toning resistance was also good.

### [Examples 11 to 20]

The same operation and the evaluation of viscosity, toning resistance, inking properties, sensitivity, and adhesiveness were carried out in the same manner as in Example 1, except that the ink composition was changed as given in Table 2. In comparison with Example 11, the inclusion of a(meth)acrylate having a hydroxyl group and a rosin skeleton tended to improve adhesiveness. Additionally, the increase of the content of the (meth)acrylate having a hydroxyl group and a rosin skeleton tended to improve the toning resistance and adhesiveness, but the inking properties tended to decrease because of the increase of the ink viscosity. In comparison with Example 11, the sensitivity tended to decrease because the reactivity of the polyfunctional (meth)acrylate was low.

### [Examples 21 to 32]

The same operation and the evaluation of viscosity, toning resistance, inking properties, sensitivity, and adhesiveness were carried out in the same manner as in Example 1, except that the ink composition was changed as given in Table 3. The inclusion of a (meth)acrylate having an alicyclic skeleton or an aliphatic skeleton with a carbon number of 6 to 18 improved inking properties and adhesiveness in comparison with Example 21, but toning resistance tended to decrease because of the decrease in viscosity. This tendency was more noticeable with the increase of the content of the (meth)acrylates having an alicyclic skeleton or an aliphatic skeleton with a carbon number of 6 to 18. Additionally, among the (meth) acrylates having an alicyclic skeleton or an aliphatic skeleton with a carbon number of 6 to 18, the higher the number of acrylate group, the higher the sensitivity. In particular, when tricyclodecane dimethanol diacrylate was used, very good adhesiveness was achieved, while good toning resistance was also achieved. Additionally, combination with a (meth) acrylate having a hydroxyl group and a rosin skeleton further improved adhesiveness.

### [Examples 33 to 45]

The same operation and the evaluation of viscosity, toning resistance, inking properties, sensitivity, and adhesiveness were carried out in the same manner as in Example 1, except that the ink composition was changed as given in Table 4. In comparison with Example 45, the inclusion of an acylphosphine oxide compound tended to increase sensitivity due to improvement of internal curability. Additionally, the photopolymerization initiator having no absorption at 385 nm markedly decreased sensitivity.

### [Examples 46 to 51]

The same operation and the evaluation of viscosity, toning resistance, inking properties, sensitivity, and adhesiveness were carried out in the same manner as in Example 1, except that the ink composition was changed as given in Table 5. When the polyfunctional (meth) acrylate has a high hydroxyl value, pigment dispersibility was good, and toning resistance tended to show a good result. On the other hand, the ink viscosity increased with the increase of the hydroxyl value, so that the inking properties tended to decrease.

### [Examples 52 to 57]

The same operation and evaluation of viscosity, toning resistance, inking properties, sensitivity, and adhesiveness were carried out in the same manner as in Example 1, except that the ink composition was changed as given in Table 6. When the acid value of the resin was high, pigment dispersibility tended to be good, and the toning resistance tended to exhibit a good result. On the other hand, with the increase of the acid value of the resin, the ink viscosity increases, so that the inking properties tended to decrease. Additionally, with the increase of the iodine value, the resin reactivity improved, so that the sensitivity tended to improve.

### [Examples 58 and 59]

The same operation and evaluation of viscosity, toning resistance, inking properties, sensitivity, and adhesiveness were carried out in the same manner as in Example 1, except that the ink composition was as given in Table 7, and waterless printing test was changed to printing test with water. The toning resistance of Example 58 was good because the reflected density in the non-printing part was 0.06. Additionally, the toning resistance of Example 59 was very good because the reflected density in the non-printing part was 0.02.

### [Examples 60 to 75]

The same operation and evaluation of viscosity, toning resistance, inking properties, sensitivity, and adhesiveness were carried out in the same manner as in Example 1, except that the ink composition was changed as given in Table 8. In particular, in Example 68 with the addition of the acid catalyst 2 showed viscosity decrease effect, and a good result was achieved. When the content of the hydroxy compound was low, the effect of viscosity decrease was weak, and flowability tended to decrease. When the content of the hydroxy compound was high, the viscosity decrease effect was high, and toning resistance tended to decrease.

### [Comparative Examples 1 to 13]

The same operation and evaluation of viscosity, toning resistance, inking properties, hiding power, sensitivity, and adhesiveness were carried out in the same manner as in Example 1, except that the ink composition was changed as given in Table 9. When a polyfunctional (meth) acrylate containing no hydroxyl group or a resin containing no hydrophilic group (acidic group) was used, all of the toning resistance, inking properties, hiding power, and adhesiveness were low insufficient. When a resin containing no unsaturated group was used, the sensitivity was markedly low and insufficient. Additionally, the ink viscosity was high because of the high acid value, and the inking properties and hiding power were low and insufficient. The compositions of the components used in Examples and Comparative Examples and the evaluation results are shown in Tables 1 to 9.

### [Table 1]

**Table 1**

| | | Example | | | | | | | | | |
|---|---|---|---|---|---|---|---|---|---|---|---|
| | | 1 | 2* | 3* | 4 | 5 | 6 | 7* | 8* | 9* | 10 |
| Composition (% by mass) | Pigment 1 | 45.0 | 45.0 | 45.0 | 45.0 | 45.0 | 45.0 | 45.0 | 45.0 | 45.0 | 45.0 |
| | Body pigment | 2.0 | 2.0 | 2.0 | 2.0 | 2.0 | 2.0 | 2.0 | 2.0 | 2.0 | 2.0 |
| | Polyfunctional (meth)acrylate 1 | 17.0 | 23.4 | 23.4 | 17.0 | 17.0 | 17.0 | 23.4 | 23.2 | 17.7 | 8.0 |
| | Polyfunctional (meth)acrylate 8 | 16.0 | 3.4 | 3.4 | - | - | - | 7.2 | - | - | - |
| | Polyfunctional (meth)acrylate 9 | - | 7.2 | - | - | - | - | 3.4 | 10.8 | 16.3 | 25.0 |
| | Polyfunctional (meth)acrylate 10 | - | - | 7.2 | - | - | - | - | - | - | - |
| | Polyfunctional (meth)acrylate 11 | - | - | - | 16.0 | - | - | - | - | - | - |
| | Polyfunctional (meth) acrylate 12 | - | - | - | - | 16.0 | - | - | - | - | - |
| | Polyfunctional (meth)acrylate 13 | - | - | - | - | - | 16.0 | - | - | - | - |
| | Resin 1 | 6.7 | 7.4 | 7.4 | 6.7 | 6.7 | 6.7 | 7.4 | 7.4 | 7.4 | 6.7 |
| | Photopolymerization initiator 1 | 8.0 | 8.0 | 8.0 | 8.0 | 8.0 | 8.0 | 8.0 | 8.0 | 8.0 | 8.0 |
| | Photopolymerization initiator 7 | 1.0 | - | - | 1.0 | 1.0 | 1.0 | - | - | - | 1.0 |
| | Polymerization inhibitor 1 | 0.1 | 0.1 | 0.1 | 0.1 | 0.1 | 0.1 | 0.1 | 0.1 | 0.1 | 0.1 |
| | Pigment dispersant | 1.0 | 1.5 | 1.5 | 1.0 | 1.0 | 1.0 | 1.5 | 1.5 | 1.5 | 1.0 |
| | Additive 1 | 2.0 | 1.5 | 1.5 | 2.0 | 2.0 | 2.0 | 1.5 | 1.5 | 1.5 | 2.0 |
| | Hydroxy compound 1 | 0.2 | - | - | 0.2 | 0.2 | 0.2 | - | - | - | 0.2 |
| | Wax | 1.0 | 0.5 | 0.5 | 1.0 | 1.0 | 1.0 | 0.5 | 0.5 | 0.5 | 1.0 |
| Evaluation | Viscosity (A) (Pa-s) | 21 | 37 | 15 | 9 | 8 | 13 | 48 | 32 | 22 | 15 |
| | Viscosity (B) (Pa·s) | 11 | 12 | 10 | 5 | 4 | 6 | 13 | 9 | 8 | 7 |
| | (B)/(A) ratio | 0.52 | 0.32 | 0.67 | 0.56 | 0.50 | 0.46 | 0.27 | 0.28 | 0.36 | 0.47 |
| | Reflection density in non-printing part | -0.04 | -0.07 | -0.14 | -0.17 | -0.19 | -0.13 | -0.04 | -0.09 | -0.12 | -0.12 |
| | Inking properties | 2 | 3 | 3 | 3 | 3 | 3 | 3 | 3 | 3 | 3 |
| | Haze (%) | 84 | 87 | 89 | 92 | 92 | 91 | 84 | 88 | 90 | 92 |
| | Conveyor speed (m/minute) | 150 | 130 | 120 | 90 | 90 | 100 | 130 | 125 | 120 | 120 |
| | Adhesiveness (N/15 mm) | 1.1 | 1.8 | 1.5 | 1.6 | 1.5 | 2.0 | 1.3 | 1.6 | 1.8 | 2.2 |

| | | | | | | | | | | | |
|---|---|---|---|---|---|---|---|---|---|---|---|
| * example not in accordance with the invention | | | | | | | | | | | |

### [Table 2]

**Table 2**

| | | Example | | | | | | | | | |
|---|---|---|---|---|---|---|---|---|---|---|---|
| | | 11* | 12* | 13* | 14* | 15* | 16* | 17* | 18* | 19* | 20* |
| Composition (% by mass) | Pigment 3 | 17.8 | 17.8 | 17.8 | 17.8 | 17.8 | 17.8 | 17.8 | 17.8 | 17.8 | 17.8 |
| | Body pigment | 2.0 | 2.0 | 2.0 | 2.0 | 2.0 | 2.0 | 2.0 | 2.0 | - | - |
| | Polyfunctional (meth)acrylate 1 | 37.3 | 26.8 | 26.8 | 26.8 | 26.8 | 26.8 | 30.4 | 21.1 | 13.0 | - |
| | Polyfunctional (meth)acrylate 8 | 16.0 | 16.0 | 16.0 | 16.0 | 16.0 | 16.0 | 18.9 | 10.7 | - | - |
| | Polyfunctional (meth)acrylate 9 | - | - | - | - | - | - | - | - | 6.0 | 11.0 |
| | Rosin (meth)acrylate 1 | | 10.5 | - | - | - | - | 4.0 | 24.5 | 41.5 | 51.5 |
| | Rosin (meth) acrylate 2 | - | - | 10.5 | - | - | - | - | - | - | - |
| | Rosin (meth) acrylate 3 | - | - | - | 10.5 | - | - | - | - | - | - |
| | Rosin (meth)acrylate 4 | - | - | - | - | 10.5 | - | - | - | - | - |
| | Rosin (meth) acrylate 5 | - | - | - | - | - | 10.5 | - | - | - | - |
| | Resin 1 | 11.8 | 11.8 | 11.8 | 11.8 | 11.8 | 11.8 | 11.8 | 8.8 | 6.6 | 4.6 |
| | Photopolymerization initiator 1 | 7.0 | 7.0 | 7.0 | 7.0 | 7.0 | 7.0 | 7.0 | 7.0 | 7.0 | 7.0 |
| | Polymerization inhibitor 1 | 0.1 | 0.1 | 0.1 | 0.1 | 0.1 | 0.1 | 0.1 | 0.1 | 0.1 | 0.1 |
| | Pigment dispersant | 3.0 | 3.0 | 3.0 | 3.0 | 3.0 | 3.0 | 3.0 | 3.0 | 3.0 | 3.0 |
| | Additive 2 | 4.0 | 4.0 | 4.0 | 4.0 | 4.0 | 4.0 | 4.0 | 4.0 | 4.0 | 4.0 |
| | Wax | 1.0 | 1.0 | 1.0 | 1.0 | 1.0 | 1.0 | 1.0 | 1.0 | 1.0 | 1.0 |
| Evaluation | Viscosity (A) (Pa·s) | 57 | 66 | 71 | 62 | 64 | 85 | 59 | 80 | 97 | 108 |
| | Viscosity (B) (Pa-s) | 14 | 14 | 13 | 10 | 10 | 12 | 13 | 17 | 19 | 21 |
| | (B)/(A) ratio | 0.25 | 0.21 | 0.18 | 0.16 | 0.16 | 0.14 | 0.22 | 0.21 | 0.20 | 0.19 |
| | Reflection density in image part | 0.03 | 0.04 | 0.06 | 0.10 | 0.10 | 0.08 | 0.06 | 0.01 | 0.00 | 0.00 |
| | Inking properties | 2 | 3 | 3 | 3 | 3 | 3 | 2 | 3 | 2 | 1 |
| | Conveyor speed (m/minute) | 90 | 80 | 70 | 60 | 70 | 70 | 80 | 70 | 60 | 60 |
| | Adhesiveness (N/15 mm) | 1.0 | 1.7 | 1.7 | 1.8 | 1.4 | 1.3 | 1.4 | 2.0 | 2.4 | 2.4 |

| | | | | | | | | | | | |
|---|---|---|---|---|---|---|---|---|---|---|---|
| * example not in accordance with the invention | | | | | | | | | | | |

### [Table 3]

**Table 3**

| | | Example | | | | | | | | | | | |
|---|---|---|---|---|---|---|---|---|---|---|---|---|---|
| | | 21 | 22 | 23 | 24 | 25 | 26 | 27 | 28 | 29 | 30 | 31 | 32 |
| Composition (% by mass) | Pigment 2 | 18.0 | 18.0 | 18.0 | 18.0 | 18.0 | 18.0 | 18.0 | 18.0 | 18.0 | 18.0 | 18.0 | 18.0 |
| | Body pigment | 1.0 | 1.0 | 1.0 | 1.0 | 1.0 | 1.0 | 1.0 | 1.0 | 1.0 | 1.0 | 1.0 | 1.0 |
| | Polyfunctional (meth)acrylate 1 | 26.3 | 48.6 | 38.6 | 26.3 | 20.6 | 14.6 | 7.6 | 2.0 | 8.6 | 7.6 | 10.6 | 6.6 |
| | Polyfunctional (meth)acrylate 8 | 26.3 | - | - | - | - | - | - | - | - | - | - | - |
| | Polyfunctional (meth)acrylate 9 | - | 4.0 | 14.0 | 26.3 | 32.0 | 38.0 | 45.0 | 50.6 | 7.0 | 20.0 | 26.0 | 36.0 |
| | Rosin (meth)acrylate 1 | - | - | - | - | - | - | - | - | 37.0 | 25.0 | 16.0 | 10.0 |
| | Resin 1 | 11.9 | 11.9 | 11.9 | 11.9 | 11.9 | 11.9 | 11.9 | 11.9 | 11.9 | 11.9 | 11.9 | 11.9 |
| | Photopolymerization initiator 1 | 4.0 | 4.0 | 4.0 | 4.0 | 4.0 | 4.0 | 4.0 | 4.0 | 4.0 | 4.0 | 4.0 | 4.0 |
| | Photopolymerization initiator 5 | 2.0 | 2.0 | 2.0 | 2.0 | 2.0 | 2.0 | 2.0 | 2.0 | 2.0 | 2.0 | 2.0 | 2.0 |
| | Photopolymerization initiator 7 | 3.0 | 3.0 | 3.0 | 3.0 | 3.0 | 3.0 | 3.0 | 3.0 | 3.0 | 3.0 | 3.0 | 3.0 |
| | Polymerization inhibitor 1 | 0.1 | 0.1 | 0.1 | 0.1 | 0.1 | 0.1 | 0.1 | 0.1 | 0.1 | 0.1 | 0.1 | 0.1 |
| | Pigment dispersant | 2.0 | 2.0 | 2.0 | 2.0 | 2.0 | 2.0 | 2.0 | 2.0 | 2.0 | 2.0 | 2.0 | 2.0 |
| | Additive 1 | 4.0 | 4.0 | 4.0 | 4.0 | 4.0 | 4.0 | 4.0 | 4.0 | 4.0 | 4.0 | 4.0 | 4.0 |
| | Hydroxy compound 1 | 0.4 | 0.4 | 0.4 | 0.4 | 0.4 | 0.4 | 0.4 | 0.4 | 0.4 | 0.4 | 0.4 | 0.4 |
| | Wax | 1.0 | 1.0 | 1.0 | 1.0 | 1.0 | 1.0 | 1.0 | 1.0 | 1.0 | 1.0 | 1.0 | 1.0 |
| Evaluation | Viscosity (A) (Pa-s) | 35 | 50 | 43 | 37 | 33 | 25 | 21 | 17 | 61 | 45 | 35 | 33 |
| | Viscosity (B) (Pa-s) | 12 | 12 | 10 | 8 | 7 | 7 | 6 | 6 | 15 | 12 | 10 | 9 |
| | (B)/(A) ratio | 0.34 | 0.24 | 0.23 | 0.22 | 0.21 | 0.28 | 0.29 | 0.35 | 0.25 | 0.27 | 0.29 | 0.27 |
| | Reflected density in non-printing part | 0.05 | 0.04 | 0.06 | 0.08 | 0.11 | 0.11 | 0.15 | 0.22 | 0.01 | 0.03 | 0.05 | 0.07 |
| | Inking properties | 2 | 2 | 2 | 3 | 3 | 3 | 3 | 3 | 2 | 3 | 3 | 3 |
| | Conveyor speed (m/minute) | 140 | 140 | 130 | 120 | 120 | 110 | 90 | 80 | 80 | 90 | 90 | 90 |
| | Adhesiveness (N/15 mm) | 1.0 | 1.6 | 2.0 | 2.1 | 2.3 | 2.3 | 2.3 | 2.2 | 2.6 | 2.5 | 2.6 | 2.6 |

### [Table 4]

**Table 4**

| | | Example | | | | | | | | | | | | |
|---|---|---|---|---|---|---|---|---|---|---|---|---|---|---|
| | | 33* | 34* | 35* | 36* | 37* | 38* | 39 | 40 | 41 | 42 | 43 | 44 | 45 |
| Composition (% by mass) | Pigment 3 | 17.8 | 17.8 | 17.8 | 17.8 | 17.8 | 17.8 | 18.0 | 18.0 | 18.0 | 18.0 | 18.0 | 18.0 | 18.0 |
| | Body pigment | 2.0 | 2.0 | 2.0 | 2.0 | 2.0 | 2.0 | 1.0 | 1.0 | 1.0 | 1.0 | 1.0 | 1.0 | 1.0 |
| | Polyfunctional (meth)acrylate 1 | 40.2 | 40.2 | 40.2 | 40.2 | 40.2 | 38.2 | 22.3 | 22.3 | 22.3 | 22.3 | 21.3 | 22.3 | 22.3 |
| | Polyfunctional (meth) acrylate 8 | 13.1 | 13.1 | 13.1 | 13.1 | 13.1 | 13.1 | - | - | - | - | - | - | - |
| | Polyfunctional (meth)acrylate 9 | - | - | - | - | - | - | 22.3 | 22.3 | 22.3 | 22.3 | 21.3 | 22.3 | 22.3 |
| | Rosin (meth)acrylate 1 | - | - | - | - | - | - | 10.0 | 10.0 | 10.0 | 10.0 | 10.0 | 10.0 | 10.0 |
| | Resin 1 | 11.8 | 11.8 | 11.8 | 11.8 | 11.8 | 11.8 | 11.9 | 11.9 | 11.9 | 11.9 | 11.9 | 11.9 | 11.9 |
| | Photopolymerization initiator 1 | 7.0 | - | - | - | - | 4.0 | 7.0 | - | - | - | 4.0 | - | - |
| | Photopolymerization initiator 2 | - | 7.0 | - | - | - | - | - | 7.0 | - | - | - | - | - |
| | Photopolymerization initiator 3 | - | - | 7.0 | - | - | - | - | - | 7.0 | - | - | - | - |
| | Photopolymerization initiator 4 | - | - | - | 7.0 | - | - | - | - | - | 7.0 | - | - | - |
| | Photopolymerization initiator 5 | - | - | - | - | 5.0 | 2.0 | - | - | - | - | 2.0 | 5.0 | 5.0 |
| | Photopolymerization initiator 6 | - | - | - | - | - | - | - | - | - | - | - | 2.0 | - |
| | Photopolymerization initiator 7 | - | - | - | - | 2.0 | 3.0 | - | - | - | - | 3.0 | - | 2.0 |
| | Polymerization inhibitor 1 | 0.1 | 0.1 | 0.1 | 0.1 | 0.1 | 0.1 | 0.1 | 0.1 | 0.1 | 0.1 | 0.1 | 0.1 | 0.1 |
| | Pigment dispersant | 3.0 | 3.0 | 3.0 | 3.0 | 3.0 | 3.0 | 2.0 | 2.0 | 2.0 | 2.0 | 2.0 | 2.0 | 2.0 |
| | Additive 2 | 4.0 | 4.0 | 4.0 | 4.0 | 4.0 | 4.0 | 4.0 | 4.0 | 4.0 | 4.0 | 4.0 | 4.0 | 4.0 |
| | Hydroxy compound 1 | - | - | - | - | - | - | 0.4 | 0.4 | 0.4 | 0.4 | 0.4 | 0.4 | 0.4 |
| | Wax | 1.0 | 1.0 | 1.0 | 1.0 | 1.0 | 1.0 | 1.0 | 1.0 | 1.0 | 1.0 | 1.0 | 1.0 | 1.0 |
| Evaluation | Viscosity (A) (Pa-s) | 48 | 61 | 54 | 60 | 61 | 48 | 42 | 52 | 49 | 52 | 43 | 40 | 46 |
| | Viscosity (B) (Pa-s) | 13 | 12 | 12 | 13 | 11 | 12 | 13 | 12 | 12 | 13 | 13 | 11 | 11 |
| | (B)/(A) ratio | 0.27 | 0.20 | 0.22 | 0.22 | 0.18 | 0.25 | 0.31 | 0.23 | 0.24 | 0.25 | 0.30 | 0.28 | 0.24 |
| | Reflected density in non-printing part | 0.04 | 0.08 | 0.07 | 0.08 | 0.12 | 0.08 | 0.03 | 0.05 | 0.04 | 0, 04 | 0.02 | 0.04 | 0.08 |
| | Inking properties | 2 | 2 | 2 | 2 | 2 | 2 | 3 | 3 | 3 | 3 | 3 | 3 | 3 |
| | Conveyor speed (m/minute) | 120 | 125 | 120 | 110 | 50 | 140 | 110 | 110 | 110 | 100 | 130 | 20 | 60 |
| | Adhesiveness (N/15 mm) | 2.3 | 2.3 | 2.4 | 2.3 | 2.4 | 2.4 | 2.4 | 2.4 | 2.5 | 2.4 | 2.4 | 2.4 | 2.4 |

| | | | | | | | | | | | | | | |
|---|---|---|---|---|---|---|---|---|---|---|---|---|---|---|
| * example not in accordance with the invention | | | | | | | | | | | | | | |

### [Table 5]

**Table 5**

| | | Example | | | | | | |
|---|---|---|---|---|---|---|---|---|
| | | 43 | 46 | 47 | 48 | 49 | 50 | 51 |
| Composition (% by mass) | Pigment 2 | 18.0 | 18.0 | 18.0 | 18.0 | 18.0 | 18.0 | 18.0 |
| | Body pigment | 1.0 | 1.0 | 1.0 | 1.0 | 1.0 | 1.0 | 1.0 |
| | Polyfunctional (meth)acrylate 1 | 21.3 | - | - | - | - | - | - |
| | Polyfunctional (meth)acrylate 2 | - | 21.3 | - | - | - | - | - |
| | Polyfunctional (meth)acrylate 3 | - | - | 21.3 | - | - | - | - |
| | Polyfunctional (meth)acrylate 4 | - | - | - | 21.3 | - | - | - |
| | Polyfunctional (meth)acrylate 5 | - | - | - | - | 21.3 | - | - |
| | Polyfunctional (meth)acrylate 6 | - | - | - | - | - | 21.3 | - |
| | Polyfunctional (meth)acrylate 7 | - | - | - | - | - | - 21.3 | 21.3 |
| | Polyfunctional (meth)acrylate 9 | 21.3 | 21.3 | 21.3 | 21.3 | 21.3 | 21.3 | 21.3 |
| | Rosin (meth)acrylate 1 | 10.0 | 10.0 | 10.0 | 10.0 | 10.0 | 10.0 | 10.0 |
| | Resin 1 | 11.9 | 11.9 | 11.9 | 11.9 | 11.9 | 11.9 | 11.9 |
| | Photopolymerization initiator 1 | 4.0 | 4.0 | 4.0 | 4.0 | 4.0 | 4.0 | 4.0 |
| | Photopolymerization initiator 5 | 2.0 | 2.0 | 2.0 | 2.0 | 2.0 | 2.0 | 2.0 |
| | Photopolymerization initiator 7 | 3.0 | 3.0 | 3.0 | 3.0 | 3.0 | 3.0 | 3.0 |
| | Polymerization inhibitor 1 | 0.1 | 0.1 | 0.1 | 0.1 | 0.1 | 0.1 | 0.1 |
| | Pigment dispersant | 2.0 | 2.0 | 2.0 | 2.0 | 2.0 | 2.0 | 2.0 |
| | Additive 1 | 4.0 | 4.0 | 4.0 | 4.0 | 4.0 | 4.0 | 4.0 |
| | Hydroxy compound 1 | 0.4 | 0.4 | 0.4 | 0.4 | 0.4 | 0.4 | 0.4 |
| | Wax | 1.0 | 1.0 | 1.0 | 1.0 | 1.0 | 1.0 | 1.0 |
| Evaluation | Viscosity (A) (Pa-s) | 43 | 113 | 97 | 78 | 106 | 43 | 40 |
| | Viscosity (B) (Pa-s) | 13 | 24 | 22 | 20 | 19 | 12 | 12 |
| | (B)/(A) ratio | 0.30 | 0.21 | 0.23 | 0.26 | 0.18 | 0.28 | 0.30 |
| | Reflected density in non-printing part | 0.02 | 0.07 | 0.07 | 0.04 | 0.03 | 0.05 | 0.06 |
| | Inking properties | 3 | 1 | 2 | 2 | 2 | 3 | 3 |
| | Conveyor speed (m/minute) | 130 | 140 | 130 | 125 | 110 | 125 | 125 |
| | Adhesiveness (N/15 mm) | 2.4 | 1.8 | 1.8 | 2.0 | 2.1 | 2.3 | 2.4 |

### [Table 6]

**Table 6**

| | | Example | | | | | | |
|---|---|---|---|---|---|---|---|---|
| | | 43 | 52 | 53 | 54 | 55 | 56 | 57 |
| Composition (% by mass) | Pigment 2 | 18.0 | 18.0 | 18.0 | 18.0 | 18.0 | 18.0 | 18.0 |
| | Body pigment | 1.0 | 1.0 | 1.0 | 1.0 | 1.0 | 1.0 | 1.0 |
| | Polyfunctional (meth) acrylate 1 | 21.3 | 21.3 | 21.3 | 21.3 | 21.3 | 21.3 | 21.3 |
| | Polyfunctional (meth) acrylate 9 | 21.3 | 21.3 | 21.3 | 21.3 | 21.3 | 21.3 | 21.3 |
| | Rosin (meth) acrylate 1 | 10.0 | 10.0 | 10.0 | 10.0 | 10.0 | 10.0 | 10.0 |
| | Resin 1 | 11.9 | - | - | - | - | - | - |
| | Resin 3 | - | 11.9 | - | - | - | - | - |
| | Resin 4 | - | - | 11.9 | - | - | - | - |
| | Resin 5 | - | - | - | 11.9 | - | - | - |
| | Resin 6 | - | - | - | - | 11.9 | - | - |
| | Resin 7 | - | - | - | - | - | 11.9 | - |
| | Resin 8 | - | - | - | - | - | - | 11.9 |
| | Photopolymerization initiator 1 | 4.0 | 4.0 | 4.0 | 4.0 | 4.0 | 4.0 | 4.0 |
| | Photopolymerization initiator 5 | 2.0 | 2.0 | 2.0 | 2.0 | 2.0 | 2.0 | 2.0 |
| | Photopolymerization initiator 7 | 3.0 | 3.0 | 3.0 | 3.0 | 3.0 | 3.0 | 3.0 |
| | Polymerization inhibitor 1 | 0.1 | 0.1 | 0.1 | 0.1 | 0.1 | 0.1 | 0.1 |
| | Pigment dispersant | 2.0 | 2.0 | 2.0 | 2.0 | 2.0 | 2.0 | 2.0 |
| | Additive 1 | 4.0 | 4.0 | 4.0 | 4.0 | 4.0 | 4.0 | 4.0 |
| | Hydroxy compound 1 | 0.4 | 0.4 | 0.4 | 0.4 | 0.4 | 0.4 | 0.4 |
| | Wax | 1.0 | 1.0 | 1.0 | 1.0 | 1.0 | 1.0 | 1.0 |
| Evaluation | Viscosity (A) (Pa-s) | 43 | 30 | 38 | 41 | 72 | 88 | 105 |
| | Viscosity (B) (Pa-s) | 13 | 7 | 8 | 11 | 17 | 21 | 26 |
| | (B)/(A) ratio | 0.30 | 0.23 | 0.21 | 0.27 | 0.24 | 0.24 | 0.25 |
| | Reflected density in non-printing part | 0.02 | 0.15 | 0.12 | 0.07 | 0.03 | 0.02 | 0.00 |
| | Inking properties | 3 | 3 | 3 | 3 | 2 | 2 | 2 |
| | Conveyor speed (m/minute) | 130 | 150 | 140 | 140 | 120 | 100 | 70 |
| | Adhesiveness (N/15 mm) | 2.4 | 2.2 | 2.3 | 2.2 | 2.3 | 2.1 | 2.1 |

### [Table 7]

**Table 7**

| | | Example | |
|---|---|---|---|
| | | 58 | 59 |
| Composition (% by mass) | Pigment 2 | 18.0 | 18.0 |
| | Body pigment | 1.0 | 1.0 |
| | Polyfunctional (meth) acrylate 1 | 23.3 | 23.0 |
| | Polyfunctional (meth) acrylate 9 | 23.3 | 23.0 |
| | Rosin (meth)acrylate 1 | 10.0 | 10.0 |
| | Resin 1 | 11.9 | 11.9 |
| | Photopolymerization initiator 1 | 4.0 | 4.0 |
| | Photopolymerization initiator 5 | 2.0 | 2.0 |
| | Photopolymerization initiator 7 | 3.0 | 3.0 |
| | Polymerization inhibitor 1 | 0.1 | 0.1 |
| | Surfactant | - | 0.6 |
| | Pigment dispersant | 2.0 | 2.0 |
| | Hydroxy compound 1 | 0.4 | 0.4 |
| | Wax | 1.0 | 1.0 |
| Evaluation | Viscosity (A) (Pa·s) | 49 | 47 |
| | Viscosity (B) (Pa·s) | 14 | 12 |
| | (B)/(A) ratio | 0.29 | 0.26 |
| | Reflected density in non-printing part | 0.06 | 0.02 |
| | Inking properties | 3 | 3 |
| | Conveyor speed (m/minute) | 140 | 130 |
| | Adhesiveness (N/15 mm) | 2.4 | 2.0 |

### [Table 8]

**Table 8**

| | | Example | | | | | | | | | | | | | | | |
|---|---|---|---|---|---|---|---|---|---|---|---|---|---|---|---|---|---|
| | | 60 | 61 | 62 | 63 | 64 | 65 | 66* | 67* | 68 | 69* | 70 | 71 | 72 | 73 | 74* | 75* |
| Composition (% by mass) | Pigment 4 | 15.9 | 15.9 | 15.9 | 15.9 | 15.9 | 15.9 | 15.9 | 15.9 | 15.9 | 15.9 | 15.9 | 15.9 | 15.9 | 15.9 | 15.9 | 15.9 |
| | Polyfunctional (meth)acrylate 1 | 38.5 | 38.5 | 38.5 | 38.5 | 38.5 | 38.5 | 38.5 | 38.5 | 38.5 | 38.5 | 38.5 | 38.5 | 38.5 | 38.5 | 38.5 | 38.5 |
| | Polyfunctional (meth)acrylate 8 | 17.2 | 17.2 | 17.2 | 17.2 | 17.2 | 17.6 | 17.2 | 17.2 | 17.0 | 17.2 | 17.8 | 17.7 | 17.4 | 17.1 | 16.9 | 16.0 |
| | Resin 10 | 13.5 | 13.5 | 13.5 | 13.5 | 13.5 | 13.5 | 13.5 | 13.5 | 13.5 | 13.5 | 13.5 | 13.5 | 13.5 | 13.5 | 13.5 | 13.5 |
| | Photopolymerization initiator 5 | 6.0 | 6.0 | 6.0 | 6.0 | 6.0 | 6.0 | 6.0 | 6.0 | 6.0 | 6.0 | 6.0 | 6.0 | 6.0 | 6.0 | 6.0 | 6.0 |
| | Polymerization inhibitor 2 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 |
| | Pigment dispersant | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 |
| | Additive 2 | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 |
| | Hydroxy compound 1 | - | 0.8 | - | - | - | - | - | - | 0.8 | - | - | - | - | - | - | - |
| | Hydroxy compound 2 | 0.8 | - | - | - | - | - | - | - | - | - | 0.2 | 0.3 | 0.6 | 0.9 | 1.1 | 2.0 |
| | Hydroxy compound 3 | - | - | 0.8 | - | - | - | - | - | - | - | - | - | - | - | - | - |
| | Hydroxy compound 4 | - | - | - | 0.8 | - | 0.4 | - | - | - | - | - | - | - | - | - | - |
| | Hydroxy compound 5 | - | - | - | - | 0.8 | - | - | - | - | - | - | - | - | - | - | - |
| | Hydroxy compound 6 | - | - | - | - | - | - | 0.8 | - | - | - | - | - | - | - | - | - |
| | Acid catalyst 1 | - | - | - | - | - | - | - | 0.8 | - | - | - | - | - | - | - | - |
| | Acid catalyst 2 | - | - | - | - | - | - | - | - | 0.2 | - | - | - | - | - | - | - |
| | Solvent | - | - | - | - | - | - | - | - | - | 0.8 | - | - | - | - | - | - |
| | Wax | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| Evaluation | Viscosity (A) (Pa·s) | 57.8 | 57.3 | 80.3 | 72.3 | 86.9 | 98.9 | 132. 7 | 56.3 | 50.0 | 147 . 3 | 71.2 | 69.6 | 60.3 | 54.8 | 53.3 | 49.2 |
| | Viscosity (B) (Pa·s) | 20.3 | 20.1 | 20.6 | 21.4 | 21.8 | 21.4 | 21.2 | 20.2 | 20.0 | 20.4 | 21.0 | 21.1 | 20.6 | 20.0 | 16.6 | 11.3 |
| | (B)/(A) ratio | 0.35 | 0.35 | 0.26 | 0.30 | 0.25 | 0.22 | 0.16 | 0.36 | 0.40 | 0.14 | 0.29 | 0.30 | 0.34 | 0.36 | 0.31 | 0.23 |
| | Reflected density in non-printing part | 0.02 | 0.03 | 0.03 | 0.02 | 0.01 | 0.03 | 0.02 | 0.03 | 0.02 | 0.03 | 0.02 | 0.03 | 0.02 | 0.04 | 0.11 | 0.15 |
| | Inking properties | 3 | 3 | 3 | 3 | 3 | 3 | 2 | 3 | 3 | 1 | 3 | 3 | 3 | 3 | 3 | 3 |
| | Adhesiveness (N/15 mm) | 1.1 | 1.1 | 1.0 | 1.0 | 1.1 | 1.0 | 1.0 | 1.1 | 1.0 | 1.0 | 1.2 | 1.2 | 1.0 | 1.0 | 1.0 | 0.7 |

| | | | | | | | | | | | | | | | | | |
|---|---|---|---|---|---|---|---|---|---|---|---|---|---|---|---|---|---|
| * example not in accordance with the invention | | | | | | | | | | | | | | | | | |

### [Table 9]

**Table 9**

| | | Comparative Example | | | | | | | | | | | | |
|---|---|---|---|---|---|---|---|---|---|---|---|---|---|---|
| | | 1 | 2 | 3 | 4 | 5 | 6 | 7 | 8 | 9 | 10 | 11 | 12 | 13 |
| Composition (% by mass) | Pigment 1 | 45.0 | 45.0 | 45.0 | - | - | - | - | - | - | - | - | - | - |
| | Pigment 2 | - | - | - | 18.0 | 18.0 | 18.0 | 18.0 | 18.0 | 18.0 | 18.0 | 18.0 | 18.0 | 18.0 |
| | Body pigment | 2.0 | 2.0 | 2.0 | 1.0 | 1.0 | 1.0 | 1.0 | 1.0 | 1.0 | 1.0 | 1.0 | 1.0 | 1.0 |
| | Polyfunctional (meth)acrylate 1 | - | 17.0 | 17.0 | - | 26.3 | 26.3 | - | 26.3 | 26.3 | 18.3 | 18.3 | 21.3 | 21.3 |
| | Polyfunctional (meth)acrylate 8 | 33.0 | 16.0 | 16.0 | 52.6 | 26.3 | 26.3 | - | - | - | 18.3 | 18.3 | - | - |
| | Polyfunctional (meth)acrylate 9 | - | - | - | - | - | - | 52.6 | 26.3 | 26.3 | - | - | 21.3 | 21.3 |
| | Rosin (meth)acrylate 1 | - | - | - | - | - | - | - | - | - | 16.0 | 16.0 | 10.0 | 10.0 |
| | Resin 1 | 6.7 | - | - | 11.9 | - | - | 11.9 | - | - | - | - | - | - |
| | Resin 2 | - | 6.7 | - | - | 11.9 | - | - | 11.9 | - | 11.9 | - | 11.9 | - |
| | Resin 9 | - | - | 6.7 | - | - | 11.9 | - | - | 11.9 | - | 11.9 | - | 11.9 |
| | Photopolymerization initiator 1 | 8.0 | 8.0 | 8.0 | 4.0 | 4.0 | 4.0 | 4.0 | 4.0 | 4.0 | 4.0 | 4.0 | 4.0 | 4.0 |
| | Photopolymerization initiator 5 | - | - | - | 2.0 | 2.0 | 2.0 | 2.0 | 2.0 | 2.0 | 2.0 | 2.0 | 2.0 | 2.0 |
| | Photopolymerization initiator 7 | 1.0 | 1.0 | 1.0 | 3.0 | 3.0 | 3.0 | 3.0 | 3.0 | 3.0 | 3.0 | 3.0 | 3.0 | 3.0 |
| | Polymerization inhibitor 1 | 0.1 | 0.1 | 0.1 | 0.1 | 0.1 | 0.1 | 0.1 | 0.1 | 0.1 | 0.1 | 0.1 | 0.1 | 0.1 |
| | Pigment dispersant | 1.0 | 1.0 | 1.0 | 2.0 | 2.0 | 2.0 | 2.0 | 2.0 | 2.0 | 2.0 | 2.0 | 2.0 | 2.0 |
| | Additive 1 | 2.0 | 2.0 | 2.0 | 4.0 | 4.0 | 4.0 | 4.0 | 4.0 | 4.0 | 4.0 | 4.0 | 4.0 | 4.0 |
| | Hydroxy compound 1 | 0.2 | 0.2 | 0.2 | 0.4 | 0.4 | 0.4 | 0.4 | 0.4 | 0.4 | 0.4 | 0.4 | 0.4 | 0.4 |
| | Wax | 1.0 | 1.0 | 1.0 | 1.0 | 1.0 | 1.0 | 1.0 | 1.0 | 1.0 | 1.0 | 1.0 | 1.0 | 1.0 |
| Evaluation | Viscosity (A) (Pa·s) | 23 | 26 | 65 | 81 | 31 | 109 | 14 | 23 | 83 | 36 | 100 | 41 | 96 |
| | Viscosity (B) (Pa-s) | 4 | 5 | 17 | 12 | 6 | 20 | 4 | 3 | 10 | 5 | 13 | 5 | 12 |
| | (B)/(A) ratio | 0.17 | 0.19 | 0.26 | 0.15 | 0.19 | 0.18 | 0.29 | 0.13 | 0.12 | 0.14 | 0.13 | 0.12 | 0.13 |
| | Reflected density in non-printing part | -0.31 | -0.27 | -0.01 | 0.24 | 0.21 | 0.06 | 0.31 | 0.46 | 0.16 | 0.29 | 0.1 | 0.26 | 0.16 |
| | Inking properties | 2 | 2 | 1 | 2 | 2 | 2 | 2 | 2 | 2 | 2 | 1 | 2 | 2 |
| | Haze (%) | 82 | 79 | 75 | - | - | - | - | - | - | - | - | - | - |
| | Conveyor speed (m/minute) | 130 | 150 | 50 | 110 | 150 | 50 | 70 | 150 | 40 | 150 | 50 | 150 | 40 |
| | Adhesiveness (N/15 mm) | 0.5 | 1.1 | 0.7 | 0.4 | 0.8 | 0.7 | 2.1 | 2.1 | 2.0 | 1.6 | 1.6 | 2.2 | 2.2 |

## Claims

1. Active energy ray-curable ink for offset printing comprising
a pigment, a polyfunctional (meth)acrylate having a hydroxyl group, and a resin having an ethylenic unsaturated group and a hydrophilic group,
wherein the hydrophilic group of the resin having an ethylenic unsaturated group and a hydrophilic group includes a carboxyl group and a hydroxyl group,
further comprising a hydroxy compound having a molecular weight of 200 or less and containing no (meth) acrylate group, and the content of the hydroxy compound having a molecular weight of 200 or less and containing no (meth)acrylate group in the ink is 0.15% by mass or more and 1.0% by mass or less.

2. The active energy ray-curable ink for offset printing according to claim 1, further comprising a (meth) acrylate having an alicyclic skeleton or an aliphatic skeleton with a carbon number of 6 to 18.

3. The active energy ray-curable ink for offset printing according to claim 2, wherein the (meth)acrylate having an alicyclic skeleton or an aliphatic skeleton with a carbon number of 6 to 18 has at least a tricyclodecane skeleton.

4. The active energy ray-curable ink for offset printing according to claim 2 or 3, wherein the content of the (meth)acrylate having an alicyclic skeleton or an aliphatic skeleton with a carbon number of 6 to 18 in the ink is 5% by mass or more and 50% by mass or less.

5. The active energy ray-curable ink for offset printing according to any one of claims 1 to 4, wherein the hydroxyl value of the polyfunctional (meth) acrylate having the hydroxyl group is 50 mgKOH/g or more and 200 mgKOH/g or less.

6. The active energy ray-curable ink for offset printing according to any one of claims 1 to 5, wherein an acid value of the resin having an ethylenic unsaturated group and a hydrophilic group is 30 mgKOH/g or more and 250 mgKOH/g or less .

7. The active energy ray-curable ink for offset printing according to any one of claims 1 to 6, wherein the resin having an ethylenic unsaturated group and a hydrophilic group includes one or more selected from an acrylic resin, a styrene-acrylic resin, and a styrene-maleic acid resin.

8. The active energy ray-curable ink for offset printing according to any one of claims 1 to 7, further comprising a (meth)acrylate having a hydroxyl group and a rosin skeleton.

9. The active energy ray-curable ink for offset printing according to claim 8, wherein the weight average molecular weight of the (meth) acrylate having a hydroxyl group and a rosin skeleton is 400 or more and 3000 or less.

10. The active energy ray-curable ink for offset printing according to any one of claims 8 to 9, wherein the content of the (meth) acrylate having a hydroxyl group and a rosin skeleton in the ink is 5% by weight or more and 50% by weight or less.

11. The active energy ray-curable ink for offset printing according to any one of claims 1 to 10, wherein the viscosity (A) at a rotation speed of 0.5 rpm measured at 25°C with a cone plate rotational viscometer is 5 Pa·s or more and 100 Pa·s or less, and the viscosity (B) at a rotation speed of 50 rpm is 10 Pa·s or more and 40 Pa·s or less, and the viscosity ratio (B)/(A) is 0.25 or more and 0.4 or less.

12. The active energy ray-curable ink for offset printing according to any one of claims 1 to 11, wherein the weight average molecular weight of the resin having an ethylenic unsaturated group and a hydrophilic group is 5,000 or more and 100,000 or less.

13. The active energy ray-curable ink for offset printing according to any one of claims 1 to 12, wherein the polyfunctional (meth)acrylate having a hydroxyl group include at least one selected from a group consisting of trimethylolpropane di(meth)acrylate, glycerol di(meth)acrylate, pentaerythritol di- or tri (meth) acrylate, diglycerol di- or tri (meth) acrylate, ditrimethylolpropane di- or tri(meth)acrylate, dipentaerythritol di-, tri-, tetra-, or penta(meth)acrylate, their ethylene oxide adducts, propylene oxide adducts, and tetraethylene oxide adducts.

14. A method for producing a printed matter, comprising applying the active energy ray-curable ink for offset printing according to any one of claims 1 to 13 to a substrate, followed by irradiation with an active energy ray.

15. The method for producing a printed matter according to claim 14, wherein the substrate is a plastic film having a thickness of 5 um or more and 50 µm or less.

## Patentansprüche

1. Durch einen aktiven Energiestrahl härtbare Tinte für einen Offsetdruck, umfassend:
ein Pigment, ein polyfunktionales (Meth)acrylat mit einer Hydroxylgruppe und ein Harz mit einer ethylenischen ungesättigten Gruppe und einer hydrophilen Gruppe,
wobei die hydrophile Gruppe des Harzes mit einer ethylenischen ungesättigten Gruppe und einer hydrophilen Gruppe eine Carboxylgruppe und eine Hydroxylgruppe enthält,
wobei die Tinte weiterhin eine Hydroxyverbindung mit einem Molekulargewicht von 200 oder weniger und keiner (Meth)acrylatgruppe aufweist, wobei der Anteil der Hydroxygruppe mit einem Molekulargewicht von 200 oder weniger und keiner (Meth)acrylatgruppe in der Tinte 0,15 Massenprozent oder mehr und 1,0 Massenprozent oder weniger ausmacht.

2. Durch einen aktiven Energiestrahl härtbare Tinte für einen Offsetdruck nach Anspruch 1, die weiterhin ein (Meth)acrylat mit einem alicyclischen Skelett oder einem aliphatischen Skelett mit einer Kohlenstoffzahl von 6 bis 18 umfasst.

3. Durch einen aktiven Energiestrahl härtbare Tinte für einen Offsetdruck nach Anspruch 2, wobei das (Meth)acrylat mit einem alicyclischen Skelett oder einem aliphatischen Skelett mit einer Kohlenstoffzahl von 6 bis 18 wenigstens ein Tricyclodecan-Skelett aufweist.

4. Durch einen aktiven Energiestrahl härtbare Tinte für einen Offsetdruck nach Anspruch 2 oder 3, wobei der Anteil des (Meth)acrylats mit einem alicyclischen Skelett oder einem aliphatischen Skelett mit einer Kohlenstoffzahl von 6 bis 18 in der Tinte 5 Massenprozent oder mehr und 50 Massenprozent oder weniger ausmacht.

5. Durch einen aktiven Energiestrahl härtbare Tinte für einen Offsetdruck nach einem der Ansprüche 1 bis 4, wobei der Hydroxylwert des polyfunktionalen (Meth)acrylats mit der Hydroxylgruppe 50 mgKOH/g oder mehr und 200 mgKOH/g oder weniger beträgt.

6. Durch einen aktiven Energiestrahl härtbare Tinte für einen Offsetdruck nach einem der Ansprüche 1 bis 5, wobei der Säurewert des Harzes mit einer ethylenischen ungesättigten Gruppe oder einer hydrophilen Gruppe 30 mgKOH/g oder mehr oder 250 mgKOH/g oder weniger beträgt.

7. Durch einen aktiven Energiestrahl härtbare Tinte für einen Offsetdruck nach einem der Ansprüche 1 bis 6, wobei das Harz mit einer ethylenischen ungesättigten Gruppe und einer hydrophilen Gruppe ein Acrylharz, ein Styrol-Acryl-Harz und/oder ein Styrol-Maleinsäure-Harz enthält.

8. Durch einen aktiven Energiestrahl härtbare Tinte für einen Offsetdruck nach einem der Ansprüche 1 bis 7, das weiterhin ein (Meth)acrylat mit einer Hydroxylgruppe und einem Kolophoniumskelett umfasst.

9. Durch einen aktiven Energiestrahl härtbare Tinte für einen Offsetdruck nach Anspruch 8, wobei das gewichtsmittlere Molekulargewicht des (Meth)acrylats mit einer Hydroxylgruppe und einem Kolophoniumskelett 400 oder mehr und 3000 oder weniger beträgt.

10. Durch einen aktiven Energiestrahl härtbare Tinte für einen Offsetdruck nach Anspruch 8 oder 9, wobei der Anteil des (Meth)acrylats mit einer Hydroxylgruppe und einem Kolophoniumskelett in der Tinte 5 Gewichtsprozent oder mehr und 50 Gewichtsprozent oder weniger ausmacht.

11. Durch einen aktiven Energiestrahl härtbare Tinte für einen Offsetdruck nach einem der Ansprüche 1 bis 10, wobei die Viskosität (A) bei einer Drehgeschwindigkeit von 0,5 U/min, gemessen bei 25°C mit einem Kegel/Platte-Rotationsviskosimeter, 5 Pa•s oder mehr und 100 Pa•s oder weniger beträgt und die Viskosität (B) bei einer Drehgeschwindigkeit von 50 U/min 10 Pa•s oder mehr und 40 Pa•s oder weniger beträgt und das Viskositätsverhältnis (B)/(A) 0,25 oder mehr und 0,4 oder weniger beträgt.

12. Durch einen aktiven Energiestrahl härtbare Tinte für einen Offsetdruck nach einem der Ansprüche 1 bis 11, wobei das gewichtsmittlere Molekulargewicht des Harzes mit einer ethylenischen ungesättigten Gruppe und einer hydrophilen Gruppe 5.000 oder mehr und 100.000 oder weniger beträgt.

13. Durch einen aktiven Energiestrahl härtbare Tinte für einen Offsetdruck nach einem der Ansprüche 1 bis 12, wobei das polyfunktionale (Meth)acrylat mit einer Hydroxylgruppe wenigstens eines aus der Gruppe enthält, die aus Trimetyhylolpropan-Di(meth)acrylat, Glycerin-Di(meth)acrylat, Pentaerythritol-Di- oder Tri(meth)acrylat, Diglycerin-Di- oder Tri(meth)acrylat, Dimethylolpropan, Di- oder Tri(meth)acrylat und Dipentaerythritol-Di-, Tri- Tetra- oder Penta(meth)acrylat sowie deren Ethylenoxid-Addukten, Propylenoxid-Addukten und Tetraethylenoxid-Addukten besteht.

14. Verfahren zum Herstellen einer Drucksache, das das Auftragen der durch einen Energiestrahl härtbaren Tinte für einen Offsetdruck gemäß einem der Ansprüche 1 bis 13 auf ein Substrat und dann das Bestrahlen mit einem aktiven Energiestrahl umfasst.

15. Verfahren zum Herstellen einer Drucksache nach Anspruch 14, wobei das Substrat eine Kunststofffolie mit einer Dicke von 5 µm oder mehr und 50 µm oder weniger ist.

## Revendications

1. Encre durcissable par rayonnement d'énergie active pour l'impression offset, comprenant
un pigment, un (méth)acrylate polyfonctionnel ayant un groupe hydroxyle, et une résine ayant un groupe à insaturation éthylénique et un groupe hydrophile, le groupe hydrophile de la résine ayant un groupe à insaturation éthylénique et un groupe hydrophile incluant un groupe carboxyle et un groupe hydroxyle, comprenant en outre un composé hydroxy ayant une masse moléculaire de 200 ou moins et ne contenant pas de groupe (méth)acrylate, et la teneur de l'encre en le composé hydroxy ayant une masse moléculaire de 200 ou moins et ne contenant pas de groupe (méth)acrylate étant de 0,15 % en masse ou plus et de 1,0 % en masse ou moins.

2. Encre durcissable par rayonnement d'énergie active pour l'impression offset selon la revendication 1, comprenant en outre un (méth) acrylate ayant un squelette alicyclique ou un squelette aliphatique avec un nombre de carbones de 6 à 18.

3. Encre durcissable par rayonnement d'énergie active pour l'impression offset selon la revendication 2, dans laquelle le (méth)acrylate ayant un squelette alicyclique ou un squelette aliphatique avec un nombre de carbones de 6 à 18 a au moins un squelette tricyclodécane.

4. Encre durcissable par rayonnement d'énergie active pour l'impression offset selon la revendication 2 ou 3, dans laquelle la teneur de l'encre en le (méth)acrylate ayant un squelette alicyclique ou un squelette aliphatique avec un nombre de carbones de 6 à 18 est de 5 % en masse ou plus et de 50 % en masse ou moins.

5. Encre durcissable par rayonnement d'énergie active pour l'impression offset selon l'une quelconque des revendications 1 à 4, dans laquelle l'indice d'hydroxyle du (méth)acrylate polyfonctionnel ayant le groupe hydroxyle est de 50 mg de KOH/g ou plus et de 200 mg de KOH/g ou moins.

6. Encre durcissable par rayonnement d'énergie active pour l'impression offset selon l'une quelconque des revendications 1 à 5, dans laquelle l'indice d'acidité de la résine ayant un groupe à insaturation éthylénique et un groupe hydrophile est de 30 mg de KOH/g ou plus et de 250 mg de KOH/g ou moins.

7. Encre durcissable par rayonnement d'énergie active pour l'impression offset selon l'une quelconque des revendications 1 à 6, dans laquelle la résine ayant un groupe à insaturation éthylénique et un groupe hydrophile inclut une ou plusieurs résines choisies parmi une résine acrylique, une résine styrène-acrylique et une résine styrène-acide maléique.

8. Encre durcissable par rayonnement d'énergie active pour l'impression offset selon l'une quelconque des revendications 1 à 7, comprenant en outre un (méth)acrylate ayant un groupe hydroxyle et un squelette de colophane.

9. Encre durcissable par rayonnement d'énergie active pour l'impression offset selon la revendication 8, dans laquelle la masse moléculaire moyenne en poids du (méth)acrylate ayant un groupe hydroxyle et un squelette de colophane est de 400 ou plus et de 3 000 ou moins.

10. Encre durcissable par rayonnement d'énergie active pour l'impression offset selon l'une quelconque des revendications 8 et 9, dans laquelle la teneur de l'encre en (méth)acrylate ayant un groupe hydroxyle et un squelette de colophane est de 5 % en poids ou plus et de 50 % en poids ou moins.

11. Encre durcissable par rayonnement d'énergie active pour l'impression offset selon l'une quelconque des revendications 1 à 10, dans laquelle la viscosité (A) à une vitesse de rotation de 0,5 tr/min mesurée à 25 °C avec un viscosimètre rotatif cône-plan est de 5 Pa•s ou plus et de 100 Pa•s ou moins, et la viscosité (B) à une vitesse de rotation de 50 tr/min est de 10 Pa•s ou plus et de 40 Pa•s ou moins, et le rapport de viscosité (B)/(A) est de 0,25 ou plus et de 0,4 ou moins.

12. Encre durcissable par rayonnement d'énergie active pour l'impression offset selon l'une quelconque des revendications 1 à 11, dans laquelle la masse moléculaire moyenne en poids de la résine ayant un groupe à insaturation éthylénique et un groupe hydrophile est de 5 000 ou plus et de 100 000 ou moins.

13. Encre durcissable par rayonnement d'énergie active pour l'impression offset selon l'une quelconque des revendications 1 à 12, dans laquelle le (méth)acrylate polyfonctionnel ayant un groupe hydroxyle inclut au moins un élément choisi dans un groupe constitué du di(méth)acrylate de triméthylolpropane, du di(méth)acrylate de glycérol, du di- ou tri(méth)acrylate de pentaérythritol, du di- ou tri(méth)acrylate de diglycérol, du di- ou tri(méth)acrylate de ditriméthylolpropane, du di-, tri-, tétra- ou penta(méth)acrylate de dipentaérythritol, leurs adduits d'oxyde d'éthylène, leurs adduits d'oxyde de propylène et leurs adduits d'oxyde de tétraéthylène.

14. Procédé de production d'un imprimé, comprenant l'application de l'encre durcissable par rayonnement d'énergie active pour l'impression offset selon l'une quelconque des revendications 1 à 13 sur un substrat, suivie d'une exposition à un rayonnement d'énergie active.

15. Procédé de production d'un imprimé selon la revendication 14, dans lequel le substrat est un film plastique ayant une épaisseur de 5 µm ou plus et de 50 µm ou moins.
